# EUROPÄISCHE PATENTSCHRIFT

(11) **EP 1 672 031 B1**
(45) Veröffentlichungstag und Bekanntmachung des Hinweises auf die Patenterteilung: **21.03.2007**
(21) Anmeldenummer: 05026851.5
(22) Anmeldetag: 08.12.2005
(51) Int. Cl.: C08L 83/04, C08K 5/00, C08K 5/56, C08G 77/26, C08G 77/388, C08G 77/398, C07F 15/00, C07F 7/08, B01J 31/22

(54) **Vernetzbare Polyorganosiloxanmassen**
Crosslinkable polyorganosiloxane compositions
Compositions d'organopolysiloxanes réticulables

(30) Priorität: 17.12.2004 DE 102004060934
(43) Veröffentlichungstag der Anmeldung: 21.06.2006
(73) Patentinhaber: Wacker Chemie AG, 81737 München (DE)
(72) Erfinder: Fehn, Armin Dr., 84561 Mehring (DE)
(74) Vertreter: Renner, Thomas

(56) Entgegenhaltungen:
- EP-A- 0 545 591
- EP-A- 0 636 642
- EP-A- 0 638 604
- EP-A- 1 077 226
- US-A- 5 523 436
- DINGER M B ET AL: "Synthesis and characterisation of platinum(II) ureylene complexes, and the X-ray structure of [Pt{PhNC(O)NAd}(COD)] (Ad = 1-adamantyl, COD = 1,5-cyclo-octadiene)" JOURNAL OF ORGANOMETALLIC CHEMISTRY, ELSEVIER-SEQUOIA S.A. LAUSANNE, CH, Bd. 526, Nr. 2, 27. Dezember 1996 (1996-12-27), Seiten 303-312, XP004071445 ISSN: 0022-328X

## Beschreibung

Die vorliegende Erfindung betrifft durch Anlagerung von Si-gebundenem Wasserstoff an aliphatische Kohlenstoff-Kohlenstoff-Mehrfachbindung vernetzbare Polyorganosiloxanmassen, Verfahren zu deren Herstellung, hierzu eingesetzte Platinkatalysatoren, die Verwendung der vernetzbaren Polyorganosiloxanmassen in einem Verfahren zur Herstellung von Siliconelastomeren sowie die Verwendung der so erhaltenen Siliconelastomere.

Additionsvernetzende Polyorganosiloxanmassen vernetzen durch Reaktion aliphatisch ungesättigter Gruppen mit Si-gebundenem Wasserstoff (Hydrosilylierung) in Gegenwart eines Katalysators, typischerweise einer Platin-Verbindung. Aufgrund der Tatsache, dass bei gleichzeitigem Vorliegen der essentiellen Bestandteile die Vernetzungsreaktion einsetzt, werden additionsvernetzende Polyorganosiloxanmassen bisher nahezu ausschließlich als zweikomponentige Formulierungen hergestellt, wobei die Zusammensetzung der einzelnen Komponenten so beschaffen ist, dass erst nach deren Vermischen alle drei essentiellen Bestandteile zusammen vorliegen. Üblicherweise enthält eine der Komponenten das alkenylfunktionelle Polyorganosiloxan und den Platin-Katalysator, die andere Komponente den SiH-funktionellen Vernetzer gegebenenfalls in Kombination mit dem alkenylfunktionellen Polyorganosiloxan. Nach Vermischen der einzelnen Komponenten kann die vollständige Aushärtung zum Siliconelastomer bei Raumtemperatur erfolgen, wird jedoch üblicherweise bei erhöhter Temperatur durchgeführt.

Das Zwei-Komponenten-System bei additionsvernetzbaren Polyorganosiloxanmassen ist mit zahlreichen Nachteilen verbunden, wie etwa Logistik, die hohe Kontaminationsgefahr durch Platinspuren und die Tatsache eines zusätzlichen Mischungsschrittes. Nach Vermischen der Komponenten wird zwar eine gebrauchsfertige Masse erhalten, doch weist diese nur eine eng begrenzte Topfzeit bei Raumtemperatur auf. Dies macht einerseits eine sich rasch anschließende Verarbeitung erforderlich, andererseits auch ein häufiges Reinigen beispielsweise der Vorratsbehälter, Dosieranlagen oder Verarbeitungsmaschinen, da sonst das beispielsweise durch Rückvermischung oder Wandhaftung verbleibende Material schließlich vergelt.

Aufgrund der genannten Nachteile hat es nicht an Versuchen gefehlt, auch additionsvernetzende Polyorganosiloxanmassen als einkomponentige Formulierung (1K-System) zur Verfügung zu stellen. Da im Fall eines 1K-Systems alle zur Vernetzung notwendigen Bestandteile gemeinsam vorliegen, besteht das Problem grundsätzlich darin, ein vorzeitiges Einsetzen der Vernetzungsreaktion, die normalerweise auch bei Raumtemperatur abläuft, anderweitig zu unterbinden. Möglichkeiten zur gezielten Einstellung, in der Regel Verlängerung der Topfzeit einer additionsvernetzenden Masse, sind hinlänglich bekannt, beispielsweise durch die Verwendung von Inhibitoren, welche die Aktivität des Platinkatalysators bei Raumtemperatur erheblich herabzusetzen vermögen, wie beispielsweise Phosphorverbindungen in Kombination mit Peroxiden gemäß der Patentschrift US 4,329,275 A oder Azodicarbonylverbindungen, wie beispielsweise in der europäischen Offenlegungsschrift EP 0 490 523 A1 beschrieben. Durch Art und Gehalt solcher Inhibitoren kann die Topfzeit zwar an sich beliebig verlängert werden, doch ist mit zunehmender Topfzeit auch eine nachteilige Beeinflussung des Vernetzungsverhaltens untrennbar verbunden. Dies gilt insbesondere dann, wenn die Topfzeit durch hohe Inhibitorgehalte auf mehrere Monate ausgedehnt wird, wodurch eine erhöhte Anspringtemperatur bei gleichzeitig niedriger Vernetzungsgeschwindigkeit bis hin zur Untervernetzung die Folge sind.

Eine davon grundsätzlich verschiedene, weitere Möglichkeit besteht darin, den Platinkatalysator in einem feinteiligen Material zu verkapseln, welches erst bei erhöhter Temperatur das Platin freisetzt. Dies kann beispielsweise durch Mikroverkapselung des Platinkatalysators mit einem thermoplatischen Siliconharz oder einem organischen Thermoplast erfolgen, wie etwa in der europäischen Offenlegungsschrift EP 0 363 006 A1 beschrieben. Dies ist aufgrund der Präparation der mikroverkapselten Katalysatoren sehr aufwendig. Das Harz darf sich dabei nicht im Siliconkautschuk lösen, da sonst der Katalysator entweichen und die Topfzeit drastisch herabsetzten würde. Somit liegt der mikroverkapselte Katalysator heterogen verteilt im Silicon vor, was sich negativ auf die Vernetzung auswirkt, da die Polyorganosiloxanmasse nicht homogen vernetzen kann. Eine weitere Ausführungsart des Stands der Technik ist das Einschließen des Katalysators in Cyclodextrinen, wie beispielsweise in den europäischen Patentschriften EP 0 423 588 B1 und EP 0 491 509 B1 beschrieben. Dies hat allerdings den großen Nachteil, dass diese Einschlussverbindungen ebenfalls nicht in Silicon löslich sind und dadurch keine homogene Verteilung im Silicon gegeben ist. Dadurch ist die Vernetzungszeit auch bei erhöhten Temperaturen sehr langsam und die derartigen vernetzbaren Polyorganosiloxanmassen für die Verarbeitung im Spritzguss nicht geeignet. Eine weitere Möglichkeit besteht darin, als Katalysatoren spezielle Platin-Komplexe auszuwählen, deren Aktivität so beschaffen ist, dass zwar bei erhöhter Temperatur die Hydrosilylierungsreaktion hinreichend schnell abläuft, bei Raumtemperatur jedoch in solch geringem Maße, dass Topfzeiten von mehreren Monaten erzielt werden. Derartige Platin-Komplexe enthaltende mittels UV-Strahlung initiiert additionsvernetzende Polyorganosiloxanmassen wurden beispielsweise in der japanischen Offenlegungsschrift JP09-040870 A2 sowie in der deutschen Offenlegungsschrift DE 36 35 236 A1 beschrieben. Weitere Platinkomplexe sind in den Patentschriften EP 0 982 370 A1, EP 0 994 159 A1 und EP 1 077 226 A1 offenbart.

Obgleich die beschriebenen Massen, insbesondere die in den letzten beiden Patentschriften genannten, deutlich verbesserte Topfzeiten bei teils hinreichend hohen Vernetzungsgeschwindigkeiten aufweisen, besteht weiterhin Bedarf, durch leistungsfähigere Platinkatalysatoren die Topfzeit und Vernetzungsgeschwindigkeit, insbesondere einkomponentig formulierter, additionsvernetzender Polyorganosiloxanmassen, zu verbessern, ohne die genannten Nachteile des Stands der Technik in Kauf nehmen zu müssen. Insbesondere besteht der Bedarf an Massen mit niedrigeren Anspringtemperaturen und dennoch langen Topfzeiten bei Raumtemperatur. Diese Aufgabe wird durch die vorliegende Erfindung gelöst.

Gegenstand der vorliegenden Erfindung sind vernetzbare Polyorganosiloxanmassen, enthaltend
(A) Polyorganosiloxane, die Reste mit aliphatischen Kohlenstoff-Kohlenstoff-Mehrfachbindungen aufweisen,
(B) Polyorganosiloxane mit Si-gebundenen Wasserstoffatomen oder anstelle von (A) und (B)
(C) Polyorganosiloxane, die SiC-gebundene Reste mit aliphatischen Kohlenstoff-Kohlenstoff-Mehrfachbindungen und Si-gebundene Wasserstoffatome aufweisen, und
(D) Platinkatalysator, ausgewählt aus der Gruppe bestehend aus 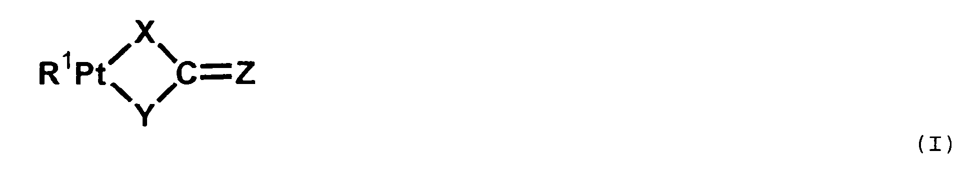 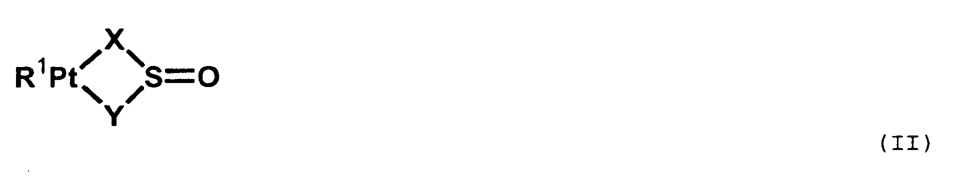 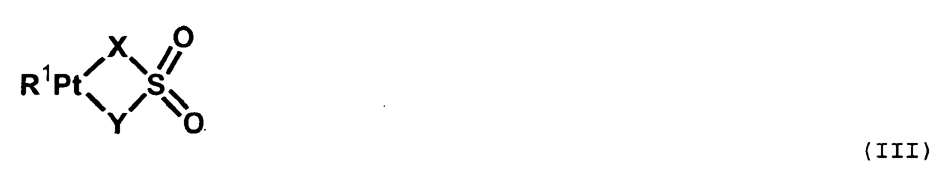 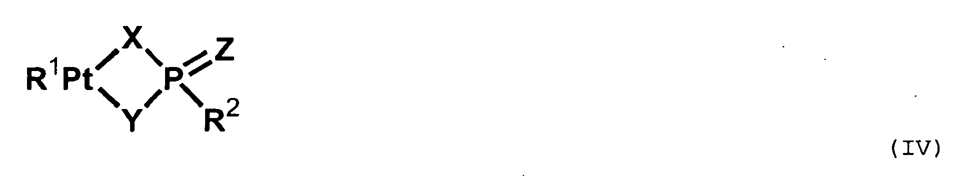 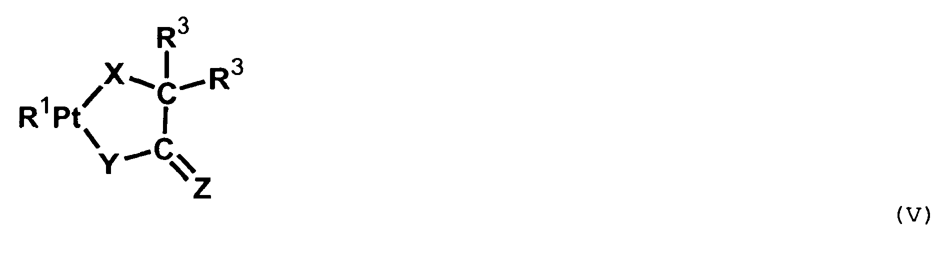 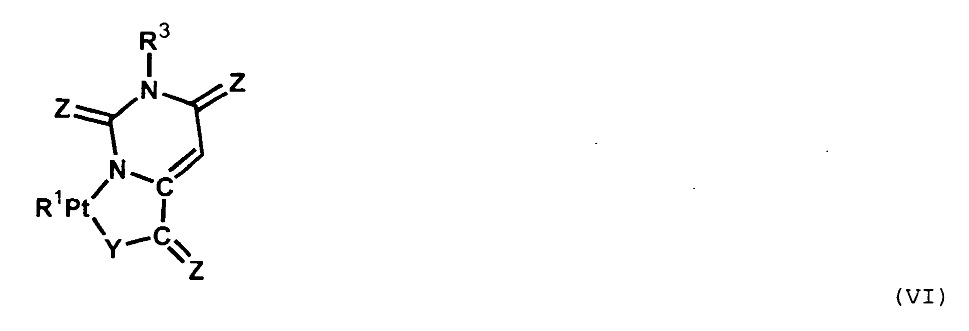
sowie Silane und Siloxane enthaltend zumindest eine der Einheiten der durchschnittlichen allgemeinen Formeln (VII), (VIII) oder (IX) 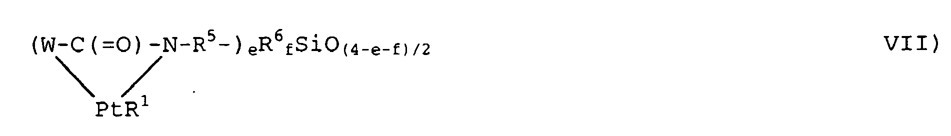 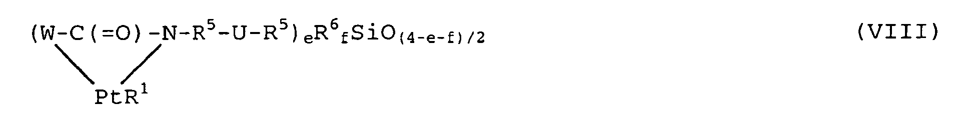 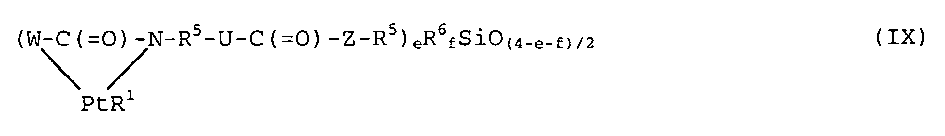 worin
- R¹: ein gegebenenfalls substituiertes Dien, das durch mindestens eine π-Bindung mit Platin verbunden ist und eine unverzweigte oder verzweigte Kette mit 4 bis 18 Kohlenstoffatomen, einen Bicyclus oder einen cyclischen Ring mit 6 bis 28 Kohlenstoffatomen darstellt,
- e: 0, 1, 2 oder 3
- f: 0, 1, 2 oder 3, mit der Maßgabe, dass e + f für Silane gleich 4 ist und für Siloxane 0, 1, 2 oder 3 ist und dass pro Molekül mindestens eine Einheit mit e ungleich 0 enthalten ist,
- U: O NR², N-C(=O)-N(H)R²
- W: NR⁷, C(R³)-CO₂R³, C(R³)-C(=Z)-R³, S, O, C(R³)₂
- X: NR², C(R³)-CO²R³, C(R³)-C(=Z)-R³, S, O, C(R³)₂
- Y: NR², C(R³)-CO₂R³, C(R³)-C(=Z)-R³, S, O, C(R³)-CN
- Z: O, S, Se, NR², CR⁴₂
- R²: unabhängig voneinander Wasserstoff, einwertige Kohlenwasserstoffreste mit 1 bis 24 Kohlenstoffatomen, die gegebenenfalls substituiert sein und oder Heteroatome in der Ketten oder den Cyclen enthalten können,
- R³: unabhängig voneinander Wasserstoff, oder einwertige, gegebenenfalls substituierte Kohlenwasserstoffreste mit 1 bis 28 Kohlenstoffatomen,
- R⁴: unabhängig voneinander Wasserstoff, oder einwertige, gegebenenfalls substituierte Kohlenwasserstoffreste mit 1 bis 24 Kohlenstoffatomen, mit der Maßgabe, dass mindestens ein Rest -CN, -CO₂R³, -C(=O)-R³, -NO₂, -C(=O)- H oder Halogen ist,
- R⁵: unabhängig voneinander zweiwertige, gegebenenfalls substituierte Kohlenwasserstoffreste mit 1 bis 26 Kohlenstoffatome,
- R⁶: unabhängig voneinander einwertige, gegebenenfalls substituierte Kohlenwasserstoffreste mit 1 bis 20 Kohlenstoffatome und
- R⁷: unabhängig voneinander einwertige, gegebenenfalls substituierte Kohlenwasserstoffreste mit 1 bis 20 Kohlenstoffatome
bedeutet.

Obwohl die Verbindungen der allgemeinen Formeln (I) bis (IX) aufgrund der Tatsache, dass sie N- und/oder S-Verbindungen enthalten, potentielle Inhibitoren sind, werden dennoch Systeme erhalten, die bei erhöhten Temperaturen sehr schnell vernetzen, niedrige Anspringtemperaturen aufweisen und gleichzeitig lange Topfzeiten bei Raumtemperatur liefern.

Die in den erfindungsgemäßen Massen eingesetzten Verbindungen (A) und (B) bzw. (C) werden bekanntermaßen so gewählt, dass eine Vernetzung möglich ist. So weist beispielsweise Verbindung (A) mindestens zwei aliphatisch ungesättigte Reste auf und Siloxan (B) mindestens drei Si-gebundene Wasserstoffatome, oder Verbindung (A) weist mindestens drei aliphatisch ungesättigte Reste auf und Siloxan (B) mindestens zwei Si-gebundene Wasserstoffatome, oder aber anstelle von Verbindung (A) und (B) wird Siloxan (C) eingesetzt, welches aliphatisch ungesättigte Reste und Si-gebundene Wasserstoffatome in den oben genannten Verhältnissen aufweist.

Bei der erfindungsgemäß eingesetzten Verbindung (A) kann es sich auch um siliciumfreie organische Verbindungen mit vorzugsweise mindestens zwei aliphatisch ungesättigten Gruppen sowie um Organosiliciumverbindungen mit vorzugsweise mindestens zwei aliphatisch ungesättigten Gruppen handeln. Beispiele für organische Verbindungen, die in den erfindungsgemäßen Massen als Komponente (A) eingesetzt werden können, sind 1,3,5-Trivinyl-cyclohexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Methylcyclopentadien, 5-Vinyl-2-norbornen, Bicyclo[2.2.1]hepta-2,5-dien, 1,3-Diisopro-penylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinyl-hexadien- (1,5) und 4,5-Dimethyl-4,5-diethyl-octadien-(1,7), N,N'-Methylen-bis-(acrylsäureamid), 1,1,1-Tris(hydroxy-methyl)-propan-triacrylat, 1,1,1-Tris(hydroxymethyl)-propan-trimethacrylat, Tripropylenglykol-diacrylat, Diallylether, Di-allylamin, Diallylcarbonat, N,N'-Diallylharnstoff, Triallyl-amin, Tris(2-methylallyl)amin, 2,4,6-Triallyloxy-1,3,5-triazin, Triallyl-s-triazin-2,4,6(1H,3H,5H)-trion, Diallylmalonsäure-ester, Polyethylenglykol Diacrylat, Polyethylenglykol Dimethacrylat, Poly-(propylenglykol)methacrylat.

Vorzugsweise enthalten die erfindungsgemäßen Siliconmassen als Bestandteil (A) jedoch eine aliphatisch ungesättigte Organosiliciumverbindung, wobei alle bisher in additionsvernetzenden Massen verwendeten, aliphatisch ungesättigten Organosiliciumverbindungen eingesetzt werden können, wie auch beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder-Polystyrol-Segmenten und/oder Silarylen-Segmenten und/oder Carboran-Segmenten und Silicon-Pfropfcopolymere mit EtherGruppen.

Als Organosiliciumverbindungen (A), die SiC-gebundene Reste mit aliphatischen Kohlenstoff-Kohlenstoff-Mehrfachbindungen aufweisen, werden vorzugsweise lineare oder verzweigte Organopolysiloxane aus Einheiten der durchschnittlichen allgemeinen Formel (X)

RₐR⁸_{b}SiO_{(4-a-b)/2} (X)

eingesetzt, wobei
- R: gleich oder verschieden sein kann und einen von aliphatischen Kohlenstoff-Kohlenstoff-Mehrfachbindungen freien, organischen Rest bedeutet,
- R⁸: gleich oder verschieden sein kann und einen einwertigen, gegebenenfalls substituierten, SiC-gebundenen Kohlenwasserstoffrest mit aliphatischer Kohlenstoff-Kohlenstoff-Mehrfachbindung bedeutet,
- a: 0, 1, 2 oder 3 ist und
- b: 0, 1 oder 2 ist
mit der Maßgabe, dass die Summe a + b kleiner oder gleich 3 ist und im Durchschnitt mindestens 2 Reste R⁸ je Molekül vorliegen.

Bei Rest R kann es sich um ein- oder mehrwertige Reste handeln, wobei die mehrwertigen Reste, wie bivalente, trivalente und tetravalente Reste, dann mehrere, wie etwa zwei, drei oder vier, Siloxy-Einheiten der Formel (X) miteinander verbinden.

R umfasst die einwertigen Reste -F, -Cl, -Br, -OR⁹, -CN, -SCN, -NCO und SiC-gebundene, gegebenenfalls substituierte Kohlenwasserstoffreste, die mit Sauerstoffatomen oder der Gruppe -C(O)- unterbrochen sein können, sowie zweiwertige, beidseitig gemäß Formel (X) Si-gebundene Reste.

Falls es sich bei Rest R um SiC-gebundene, substituierte Kohlenwasserstoffreste handelt, sind als Substituenten Halogenatome, phosphorhaltige Reste, Cyanoreste, -OR⁹ -NR⁹-, - NR⁹₂, -NR⁹-C(O)-NR⁹₂, -C(O)-NR⁹₂, -C(O)-R⁹, -C(O)OR⁹, -SO₂-Ph und -C₆F₅ mit R⁹ gleich der oben genannten Bedeutung und Ph gleich Phenylrest bevorzugt.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecyl-rest, und Octadecylreste, wie der n-Octadecylrest, Cycloalkylreste, wie Cyclopentyl-, Cyclohexyl-, Cycloheptyl- und Methyl-cyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der *α*- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest, Halogenarylreste, wie der o-, m- und p-Chlorphenylrest,-(CH₂)ₙ-N(R⁹)C(O)NR⁹₂, -(CH₂)ₙ-C(O)NR⁹₂, -(CH₂)ₙ-C(O)R⁹, -(CH₂)ₙ-C(O)OR⁹-(CH₂)ₙ-C(O)NR⁹₂, -(CH₂)ₙ-C(O)-(CH₂)ₘ-C(O)CH₃, -(CH₂)ₙ-NR⁹-(CH₂)ₘ-NR⁹₂, -(CH₂)ₙ-O-CO-R⁹, -(CH₂)ₙ-O- (CH₂)ₘ-CH(OH)-CH₂OH, -(CH₂)ₙ-(OCH₂CH₂)ₘ-OR⁹, -(CH₂)ₙ-SO₂-Ph und -(CH₂)ₙ-O-C₆F₅, wobei R⁹ eine oben dafür angegebene Bedeutung hat, n und m gleiche oder verschiedene ganze Zahlen zwischen 0 und 10 sind und Ph den Phenylrest bezeichnet.

Beispiele für R gleich zweiwertige, beidseitig gemäß Formel (X) Si-gebundene Reste sind solche, die sich von den voranstehend für Rest R genannten einwertigen Beispiele dadurch ableiten, dass eine zusätzliche Bindung durch Substitution eines Wasserstoffatoms erfolgt. Beispiele für derartige Reste sind -(CH₂)ₙ-, -CH(CH₃)-, -C(CH₃)₂-, -CH(CH₃)-CH₂-, -C₆H₄-, -CH(Ph)-CH₂-, -C(CF₃)₂-, -(CH₂)ₙ-C₆H₄-(CH₂)ₙ-, -(CH₂)ₙ-C₆H₄-C₆H₄-(CH₂)ₙ-, -(CH₂O)ₘ-, -(CH₂CH₂O)ₘ-, -(CH₂)ₙ-Oₓ-C₆H₄-SO₂-C₆H₄-Oₓ-(CH₂)ₙ-, wobei x 0 oder 1 ist, m und n die voranstehend genannte Bedeutung haben sowie Ph gleich Phenylrest ist.

Bevorzugt handelt es sich bei Rest R um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest R⁸ kann es sich um beliebige, einer Anlagerungsreaktion (Hydrosilylierung) mit einer SiH-funktionellen Verbindung zugängliche Gruppen handeln.

Falls es sich bei Rest R⁸ um SiC-gebundene, substituierte Kohlenwasserstoffreste handelt, sind als Substituenten Halogenatome, Cyanoreste und -OR⁹ bevorzugt, wobei R⁹ die oben genannte Bedeutung hat.

Bevorzugt handelt es sich bei Rest R⁸ um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden.

Das Molekulargewicht des Bestandteils (A) kann in weiten Grenzen variieren, etwa zwischen 10² und 10⁶ g/mol. So kann es sich bei dem Bestandteil (A) beispielsweise um ein relativ niedermolekulares alkenylfunktionelles Oligosiloxan, wie 1,2-Divinyl-tetramethyldisiloxan, handeln, jedoch auch um ein über kettenständige oder endständige Si-gebundene Vinylgruppen verfügendes hochpolymeres Polydimethylsiloxan, z. B. mit einem Molekulargewicht von 10⁵ g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel R₃SiO_{1/2}, R⁸R₂SiO_{1/2}, R⁸RSiO_{2/2} und R₂SiO_{2/2} zusammengesetzt, wobei R und R⁸ die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, R⁸SiO_{3/2} und SiO_{4/2} bevorzugt sind. Selbstverständlich können auch Mischungen unterschiedlicher, den Kriterien des Bestandteils (A) genügender Siloxane eingesetzt werden.

Besonders bevorzugt als Komponente (A) ist die Verwendung vinylfunktioneller, im wesentlichen linearer Polydiorganosiloxane mit einer Viskosität von 0,01 bis 500 000 Pa·s, besonders bevorzugt von 0,1 bis 100 000 Pa·s, jeweils bei 25°C.

Als Organosiliciumverbindung (B) können alle hydrogenfunktionellen Organosiliciumverbindungen eingesetzt werden, die auch bisher in additionsvernetzbaren Massen eingesetzt worden sind.

Als Organopolysiloxane (B), die Si-gebundene Wasserstoffatome aufweisen, werden vorzugsweise lineare, cyclische oder verzweigte Organopolysiloxane aus Einheiten der durchschnittlichen allgemeinen Formel (XI)

R_{c}H_{d}SiO_{(4-c-d)/2} (XI)

eingesetzt, worin
- R: gleich oder verschieden sein kann und die oben angegebene Bedeutung hat,
- c: 0, 1, 2 oder 3 ist und
- d: 0, 1 oder 2 ist,
mit der Maßgabe, dass die Summe von c + d kleiner oder gleich 3 ist und im Mittel mindestens zwei Si-gebundene Wasserstoffatome je Molekül vorliegen.

Vorzugsweise enthält das erfindungsgemäß eingesetzte Organopolysiloxan (B) Si-gebundenen Wasserstoff im Bereich von 0,04 bis 1,7 Gewichtsprozent, bezogen auf das Gesamtgewicht des Organopolysiloxans (B).

Das Molekulargewicht des Bestandteils (B) kann ebenfalls in weiten Grenzen variieren, etwa zwischen 10² und 10⁶ g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständige oder endständige SiH-Gruppen verfügendes hochpolymeres Polydimethylsiloxan oder ein SiH-Gruppen aufweisendes Siliconharz. Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein. Lineare und cyclische Polysiloxane sind vorzugsweise aus Einheiten der Formel R₃SiO_{1/2}, HR₂SiO_{1/2}, HRSiO_{2/2} und R₂SiO_{2/2} zusammengesetzt, wobei R die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, HSiO_{3/2} und SiO_{4/2} bevorzugt sind. Selbstverständlich können auch Mischungen unterschiedlicher, den Kriterien des Bestandteils (B) genügender Siloxane eingesetzt werden. Insbesondere können die den Bestandteil (B) bildenden Moleküle zusätzlich zu den obligaten SiH-Gruppen ggf. zugleich auch aliphatisch ungesättigte Gruppen enthalten. Besonders bevorzugt ist die Verwendung niedermolekularer SiHfunktioneller Verbindungen, wie Tetrakis(dimethyl-siloxy)silan und Tetramethylcyclotetrasiloxan, sowie höhermolekularer, SiHhaltiger Siloxane, wie Poly(hydrogenmethyl)siloxan und Poly(dimethylhydrogenmethyl)siloxan mit einer Viskosität bei 25°C von 10 bis 10 000 mPa·s, oder analoge SiH-haltige Verbindungen, bei denen ein Teil der Methylgruppen durch 3,3,3-Trifluorpropyl- oder Phenylgruppen ersetzt ist.

Bestandteil (B) ist vorzugsweise in einer solchen Menge in den erfindungsgemäßen vernetzbaren Silicongesamtmassen enthalten, dass das Molverhältnis von SiH-Gruppen zu aliphatisch ungesättigten Gruppen bei 0,1 bis 20, besonders bevorzugt zwischen 1,0 und 5,0, liegt.

Die erfindungsgemäß eingesetzten Komponenten (A) und (B) sind handelsübliche Produkte bzw. nach in der Chemie gängigen Verfahren herstellbar.

Anstelle von Komponente (A) und (B) können die erfindungsgemäßen Massen Organopolysiloxane (C), die aliphatische Kohlenstoff-Kohlenstoff-Mehrfachbindungen und Si-gebundene Wasserstoffatome aufweisen, enthalten, was jedoch nicht bevorzugt ist.

Falls Siloxane (C) eingesetzt werden, handelt es sich vorzugsweise um solche aus Einheiten der Formel

R_{g}SiO_{4-g/2}, RₕR⁸SiO_{3-h/2} und RᵢHSiO_{3-i/2},

wobei R und R⁸ die oben dafür angegebene Bedeutung haben,
- g: 0, 1, 2 oder 3 ist,
- h: 0, 1 oder 2 ist und
- i: 0, 1 oder 2 ist,
mit der Maßgabe, dass je Molekül mindestens 2 Reste R⁸ und mindestens 2 Si-gebundene Wasserstoffatome vorliegen.

Beispiele für Organopolysiloxane (C) sind solche aus SiO_{4/2}-, R₃SiO_{1/2}-, R₂R⁸SiO_{1/2}- und R₂HSiO_{1/2}-Einheiten, sogenannte MQ-Harze, wobei diese Harze zusätzlich RSiO_{3/2}- und R₂SiO-Einheiten enthalten können, sowie lineare Organopolysiloxane im wesentlichen bestehend aus R₂R⁸SiO_{1/2}-, R₂SiO- und RHSiO-Einheiten mit R und R⁸ gleich der oben genannten Bedeutung.

Die Organopolysiloxane (C) besitzen vorzugsweise eine durchschnittliche Viskosität von 0,01 bis 500 000 Pa·s, besonders bevorzugt 0,1 bis 100 000 Pa·s, jeweils bei 25°C.

Organopolysiloxane (C) sind nach in der Chemie gängigen Methoden herstellbar.

Beispiele für Rest R⁹ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl, neo-Pentyl-, tert.-Pentylrest, Hexylreste, wie der n-Hexylrest, Heptylreste, wie der n- Heptylrest, Octylreste, wie der n-Octylrest und iso-Octylreste, wie der 2,2,4- Trimethylpentylrest, Nonylreste, wie der n-Nonylrest, Decylreste, wie der n-Decylrest, Cycloalkylreste, wie Cyclopropyl-, Cyclopentyl-, Cyclohexyl-, Cycloheptylreste und Methylcyclohexylreste, ungesättigte Reste, wie der Allyl-, 5-Hexenyl-, 7-Octenyl-, Cyclohexenyl- und Styrylrest, Arylreste, wie Phenylreste, o-, m- oder p-Tolylreste, Xylylreste und Ethylphenylreste, Aralkylreste, wie der Benzylrest und der *α*- und β-Phenylethylrest, sowie Reste der Formel -C(R)=CR₂; Beispiele für halogenierte Reste R⁹ sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- oder p-Chlorphenylrest.

Bevorzugt handelt es sich bei R⁹ um Wasserstoffatom, Alkylreste und Arylreste, wobei Wasserstoffatom, der Methyl- und der Ethylrest besonders bevorzugt sind.

Beispiele für R¹ sind Diene, wie beispielsweise 1,3-Butadien, 1,4-Diphenyl-1,3-butadien, 1,3-Cyclohexadien, 1,4-Cyclohexadien, 2,4-Hexadien, 1,4-Hexadien, 1,5-Hexadien, 2,5-Dimethyl-2,4-Hexadien, *α*- und β-Terpinen, (R)-(+)-4-Isopropenyl-1-methyl-1-cyclohexen, (S)-(-)-4-Isopropenyl-1-methyl-1-cyclohexen, 4-Vinyl-1-cyclohexen, 2,5-Heptadien, 1,5-Cyclooctadien, 1-Chlor-1,5-Cyclooctadien, 1,5-Dimethyl-1,5-cyclooctadien, 1,6-Dimethyl-1,5-cyclooctadien, 1,5-Dichlor-1,5-cyclooctadien, 5,8-Dihydro-1,4-dioxocin, η⁴-1,3,5,7-Cyclooctatetraen, η⁴-1, 3, 5-Cycloheptatrien, η⁴-1-Fluor-1, 3, 5, 7-Cyclooctatetraen, η⁴-1, 2, 4, 7-Tetramethyl-1, 3, 5, 7-cyclooctatetraen, 1,8-Cyclotetradekadien, 1,9-Cyclohexadecadien, 1,13-Cyclotetracosadien, η⁴-1, 5, 9-Cyclododekatrien, η⁴-1, 5, 10-Trimethyl-1, 5, 9-cyclododekatrien, η⁴-1, 5, 9, 13-Cyclohexadecatetraen, Bicyclo[2.2.1]hepta-2,5-dien, 1,3-Dodecadien, Methylcyclopentadiendimer, 4,7-Methylen-4,7,8,9-tetrahydro-inden, Bicyclo[4.2.2]deca-3,9-dien-7,8-dicarbonsäureanhydrid, Bicyclo[4.2.2]deca-3,9-dien-7,8-dicarbonsäurealkylester und Bicyclo[4.2.2]deca-3,7,9-trien-7,8-dicarbonsäurealkylester.

Bevorzugt handelt es sich bei Dien R¹ um 1,5-Cyclooctadien, 1,5-Dimethyl-1,5-cyclooctadien, 1,6-Dimethyl-1,5-Cyclooctadien, 1-Chlor-1,5-Cyclooctadien, 1,5-Dichlor-1,5-Cyclooctadien, 1,8-Cyclotetradekadien, 1,9-Cyclohexadecadien, 1,13-Cyclotetracosadien, Bicyclo[2.2.1]hepta-2,5-dien, 4-Vinyl-1-cyclohexen, und η⁴-1,3,5,7-cyclooctatetraen, wobei 1,5-Cyclooctadien, Bicyclo[2.2.1]hepta-2,5-dien, 1,5-Dimethyl-1,5-cyclooctadien, 1,6-Dimethyl-1,5-cyclooctadien besonders bevorzugt sind.

Beispiele für R² sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl, neo-Pentyl-, tert.-Pentylrest, Hexylreste, wie der n-Hexylrest, Heptylreste, wie der n- Heptylrest, Norbornylrest, Octylreste, wie der n-Octylrest, Bicyclooctylrest und iso-Octylreste, wie der 2,2,4-Trimethylpentylrest, Nonylreste, wie der n-Nonylrest, Decylreste, wie der n-Decylrest und Adamantylrest, Cycloalkylreste, wie Cyclopropyl-, Cyclopentyl-, Cyclohexyl-, Cycloheptylreste und Methylcyclohexylreste, ungesättigte Reste, wie der Allyl-, 5-Hexenyl-, 7-Octenyl-, Cyclohexenyl- und Styrylrest, Arylreste, wie Phenylreste, o-, m- oder p-Tolylreste, Xylylreste und Ethylphenylreste, Aralkylreste, wie der Benzylrest und der *α*- und β-Phenylethylrest, weitere Beispiele für R² sind substituierte Reste, wie Cyanoreste, Hydroxy-, Methoxy-, Ethoxy-, Isopropoxy-, Butoxy- und Phenoxyreste sowie Reste mit den Strukturen -CO₂R³ und -C(=O)-R³.

Beispiele für halogenierte Reste R² sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- oder p-Chlorphenylrest.

Bevorzugt handelt es sich bei Rest R² um Wasserstoffatom, Kohlenwasserstoffreste mit 1 bis 10 Kohlenstoffatomen, sowie Reste mit den Strukturen -CO₂R³ und -C(=O)-R³, wobei Wasserstoffatom, Methylrest, Ethylrest, tert.-Butylrest, Adamantylrest, Phenylreste sowie Reste mit den Strukturen -CO₂R³ und -C(=O)-R³ besonders bevorzugt sind.

Beispiele für R³ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl, neo-Pentyl-, tert.-Pentylrest, Hexylreste, wie der n-Hexylrest, Heptylreste, wie der n- Heptylrest, Norbornylrest, Octylreste, wie der n-Octylrest, Bicyclooctylrest und iso-Octylreste, wie der 2,2,4-Trimethylpentylrest, Nonylreste, wie der n-Nonylrest, Decylreste, wie der n-Decylrest und Adamantylrest, Cycloalkylreste, wie Cyclopropyl-, Cyclopentyl-, Cyclohexyl-, Cycloheptylreste und Methylcyclohexylreste, ungesättigte Reste, wie der Allyl-, 5-Hexenyl-, 7-Octenyl-, Cyclohexenyl- und Styrylrest, Arylreste, wie Phenylreste, o-, m- oder p-Tolylreste, Xylylreste und Ethylphenylreste, Aralkylreste, wie der Benzylrest und der *α*- und β-Phenylethylrest, weitere Beispiele für R³ sind substituierte Reste, wie Cyanoreste, Hydroxy-, Methoxy-, Ethoxy-, Isopropoxy-, Butoxy- und Phenoxyreste. Beispiele für halogenierte Reste R³ sind Halogenalkylreste, wie der Trifluormethylrest, 3,3,3-Trifluor-n-propylrest, der 2,2,2,2' ,2' ,2'-Hexafluorisopropylrest, der Heptafluorisopropylrest und Halogenarylreste, wie der o-, m- oder p-Chlorphenylrest.

Bevorzugt handelt es sich bei Rest R³ um Wasserstoffatom und Kohlenwasserstoffreste mit 1 bis 10 Kohlenstoffatomen, wobei Wasserstoffatom, Methylrest, Ethylrest, tert.-Butylrest und Phenylrest besonders bevorzugt sind.

Bevorzugt handelt es sich bei Rest R⁴ um Wasserstoff und einwertige, gegebenenfalls substituierte Kohlenwasserstoffreste mit 1 bis 24 Kohlenstoffatomen, mit der Maßgabe, dass mindestens ein Rest ausgewählt aus der Gruppe enthaltend -CN, -CO₂R³, -C(=O)-R³, -NO₂, -C(=O)-H oder Halogen enthalten ist.

Beispiele für R⁴ sind Wasserstoff, Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl, neo-Pentyl-, tert.-Pentylrest, Hexylreste, wie der n-Hexylrest, Heptylreste, wie der n- Heptylrest, Norbornylrest, Octylreste, wie der n-Octylrest, Bicyclooctylrest und iso-Octylreste, wie der 2,2,4-Trimethylpentylrest, Nonylreste, wie der n-Nonylrest, Decylreste, wie der n-Decylrest sowie Reste mit den Strukturen -CO₂R³ und -C(=O)-R³.

Bevorzugt handelt es sich bei Rest R⁴ um Wasserstoffatom, Kohlenwasserstoffreste mit 1 bis 10 Kohlenstoffatomen, sowie Reste mit den Strukturen -CO₂R³ und -C(=O)-R³, wobei Wasserstoffatom, Methylrest, Phenylreste sowie Reste mit den Strukturen -CO₂R³ und -C(=O)-R³ besonders bevorzugt sind.

Beispiele für R⁵ sind Alkylenreste, wie der Methylen-, Ethylen-Propylen-, 1,6-Hexylen- und 2,5-Hexylenrest; Arylenreste, wie der Phenylen-, Methoxyphenylenrest; Arylalkylenreste, wie -CH₂- CH(CH₃)-C₆H₃-CH(CH₃)-CH₂-,-(CH₂)ₙ-, -CH(CH₃)-, -C(CH₃)₂-, -CH(CH₃)-CH₂-, -C₆H₄-, -CH(Ph)-CH₂-, -C(CF₃)₂-, -(CH₂)ₙ-C₆H₄-(CH₂)ₙ-, -C₆H₄-(CH₂)ₙ-, -C₆H₄-O-(CH₂)ₙ-, -(CH₂)ₙ-C₆H₄-C₆H₄-(CH₂)ₙ-, -(CH₂O)ₘ-, - (CH₂CH₂O)ₘ-, -(CH₂)ₙ-Oₓ-C₆H₄-SO₂-C₆H₄-Oₓ-(CH₂)ₙ-, wobei x gleich 0 oder 1 ist, n und m gleiche oder verschiedene ganze Zahlen zwischen 0 und 10 sind und Ph den Phenylrest bezeichnet.

Bevorzugt handelt es sich bei Rest R⁵ um zweiwertige Kohlenwasserstoffreste mit 1 bis 12 Kohlenstoffatomen, wie -CH₂-, -C₂H₄-, -C₃H₆-, -C₄H₈-, -C₅H₁₀-, -C₆H₄-, -C₆H₄-(CH₂)ₙ-, -C₆H₄-O-(CH₂)ₙ-.

Beispiele für R⁶ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl, neo-Pentyl-, tert.-Pentylrest, Hexylreste, wie der n-Hexylrest, Heptylreste, wie der n- Heptylrest, Octylreste, wie der n-Octylrest und iso-Octylreste, wie der 2,2,4- Trimethylpentylrest, Nonylreste, wie der n-Nonylrest, Decylreste, wie der n-Decylrest und Adamantylrest, Cycloalkylreste, wie Cyclopropyl-, Cyclopentyl-, Cyclohexyl-, Cycloheptylreste und Methylcyclohexylreste, ungesättigte Reste, wie der Vinyl-, Allyl-, 5-Hexenyl-, 7-Octenyl-, Cyclohexenyl- und Styrylrest, Arylreste, wie Phenylreste, o-, m- oder p-Tolylreste, Xylylreste und Ethylphenylreste, Aralkylreste, wie der Benzylrest und der *α-* und β-Phenylethylrest, weitere Beispiele für R⁶ sind substituierte Reste, wie Cyanoreste, Hydroxy-, Methoxy-, Ethoxy-, Isopropoxy-, Butoxy- und Phenoxyreste, 2-Methoxyphenyl-, 3-Methoxyphenyl-, 4-Methoxyphenyl-, 2,4-Dimethoxyphenyl-, Acetoxyphenyl- und Methoxyhydroxyphenylrest.

Beispiele für halogenierte Reste R⁶ sind Halogenalkylreste, wie der Trifluormethylrest, 3,3,3-Trifluor-n-propylrest, der 2,2,2,2',2',2'-Hexafluorisopropylrest, der Heptafluorisopropylrest und Halogenarylreste, wie der o-, m-, und p-Chlorphenylrest.

Bevorzugt handelt es sich bei Rest R⁶ um Kohlenwasserstoffreste mit 1 bis 10 Kohlenstoffatomen, wobei Methylrest, Vinylrest, 3,3,3-Trifluor-n-propylrest und Phenylrest besonders bevorzugt sind.

Beispiele für R⁷ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl, neo-Pentyl-, tert.-Pentylrest, Hexylreste, wie der n-Hexylrest, Heptylreste, wie der n- Heptylrest, Norbornylrest, Octylreste, wie der n-Octylrest, Bicyclooctylrest und iso-Octylreste, wie der 2,2,4-Trimethylpentylrest, Nonylreste, wie der n-Nonylrest, Decylreste, wie der n-Decylrest und Adamantylrest, Cycloalkylreste, wie Cyclopropyl-, Cyclopentyl-, Cyclohexyl-, Cycloheptylreste und Methylcyclohexylreste, ungesättigte Reste, wie der Allyl-, 5-Hexenyl-, 7-Octenyl-, Cyclohexenyl- und Styrylrest, Arylreste, wie Phenylreste, o-, m- oder p-Tolylreste, Xylylreste und Ethylphenylreste, Aralkylreste, wie der Benzylrest und der *α*- und β-Phenylethylrest.

Weitere Beispiele für R⁷ sind substituierte Reste, wie Acetoxy-, Hydroxyaryl-, Methoxyaryl-, Ethoxyaryl-, Isopropoxyaryl-, Butoxyaryl- und Phenoxyarylreste, wie 2-Methoxyphenyl-, 3-Methoxyphenyl-, 4-Methoxyphenyl-, 2,4-Dimethoxyphenyl-, Acetoxyphenyl- und Methoxyhydroxyphenylrest. Beispiele für halogenierte Reste R⁷ sind Halogenalkylreste, wie der Trifluormethylrest, 3,3,3-Trifluor-n-propylrest, der 2,2,2,2',2',2'-Hexafluorisopropylrest, der Heptafluorisopropylrest und Halogenarylreste, wie der o-, m-, p-Chlorphenylrest, o-, m-, p- Bromphenylrest, o-, m- oder p-Fluorphenylrest, 3,4-Dichlorphenyl-, 2,4-Dichlorphenyl-, 3,5-Dichlorphenyl-, 3,4 Dibromphenyl-, 2,4-Dibromphenyl- und Pentafluorphenylrest.

Bevorzugt handelt es sich bei Rest R⁷ Kohlenwasserstoffreste mit 1 bis 10 Kohlenstoffatomen, wobei tert.-Butylrest, Acetoxyrest und Phenylrest besonders bevorzugt sind.

Bei den Platinkatalysatoren (D) handelt es bevorzugt um Platinkomplexe der Formel (I), (V), (VII), (VIII) und (IX) wobei R¹ COD oder nbd bedeutet. COD steht dabei für 1,5-Cyclooctadien und nbd für Bicyclo[2.2.1]hepta-2,5-dien.

Besonders bevorzugt handelt es sich bei den Platinkatalysatoren (D) um CODPt(-N(Ph)-C(=O)-(Ph)N-), CODPt(-N(-C(=O)CH₃)-C(=O)-(CH₃(O=)C-)N-), (-N(-C(=O)(CH₂)₁₆CH₃)-C(=O)-(CH₃(CH₂)₁₆(O=)C-)N-)*,* CODPt(-N(-C(=O)CH₃)-C(=O)-(Ph)N-), CODPt(-N(-C(=O)(CH₂)₁₆CH₃)-C(=O)-(Ph)N-), CODPt(-N(-C(=O)CH₃)-C(=O)-((CH₃)₃C-)N-), COD(Pt(-N(C₆H₄-CH₃)-C(=O)-(CH₃-C₆H₄)N-), CODPt(-N(Ph) -C(=O)-(C₆H₁₃)N-), COD(Pt(-N(C₆H₄-CH₃)-C(=O)-(C₆H₁₃)N-), nbdPt(-N(Ph)-C(=O)-(Ph)N-), nbdPt(-N(Ph)-C(=O)-(C₆H₁₃)N-), nbdPt(-N(-C(=O)CH₃)-C(=O)-(CH₃(O=)C-)N-), nbdPt(-N(-C(=O)CH₃)-C(=O)-(Ph)N-) und Verbindungen (D) der Formel (VII), (VIII) und (IX).

Beispiele für die Platinkatalysatoren (D) der durchschnittlichen allgemeinen Formeln (VII), (VIII) und (IX) sind Platinkomplexe der Formel(VII), (VIII) und (IX) wobei R¹ COD oder nbd bedeutet. COD steht dabei für 1,5-Cyclooctadien und nbd für Bicyclo[2.2.1]hepta-2,5-dien. Weitere Beispiele sind 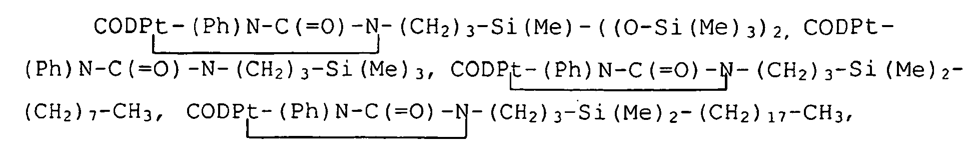 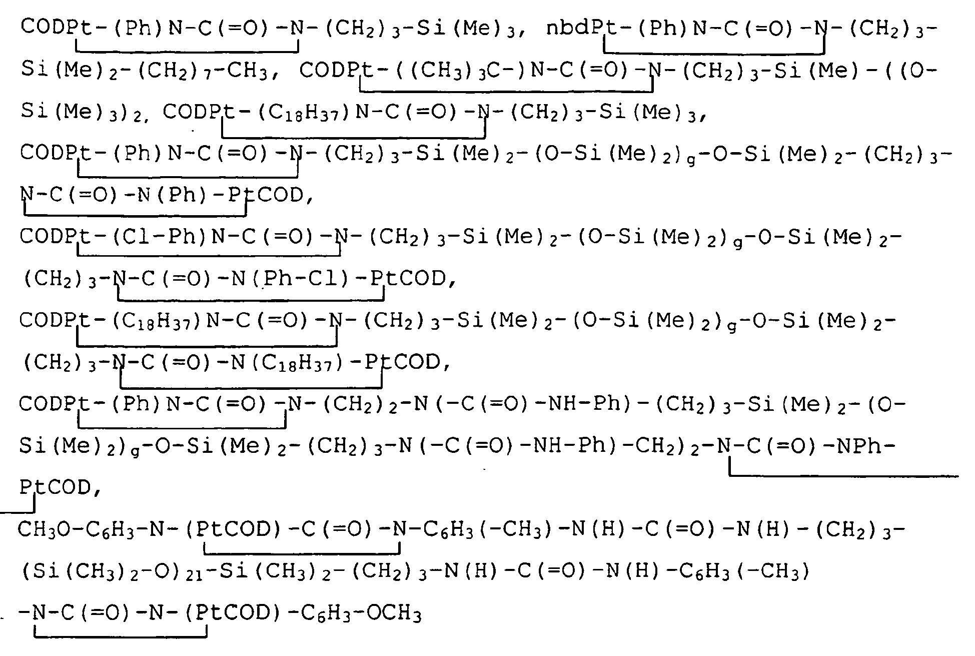 mit g gleich 0, oder eine ganze Zahl von 1 bis 500 wobei 1 bis 100 bevorzugt ist und 1 bis 50 besonders bevorzugt ist und Me eine Methylgruppe bedeutet.

Besonders bevorzugt sind Platinkomplexe der Formel (VII) und (VIII) mit R¹ gleich COD oder nbd.

Ein weiterer Gegenstand der vorliegenden Erfindung ist ein Verfahren zur Herstellung von vernetzbaren Polyorganosiloxanmassen, enthaltend
(A) Polyorganosiloxane, die Reste mit aliphatischen Kohlenstoff-Kohlenstoff-Mehrfachbindungen aufweisen,
(B) Polyorganosiloxane mit Si-gebundenen Wasserstoffatomen oder anstelle von (A) und (B)
(C) Polyorganosiloxane, die SiC-gebundene Reste mit aliphatischen Kohlenstoff-Kohlenstoff-Mehrfachbindungen und Si-gebundene Wasserstoffatome aufweisen, und
(D) Platinkatalysator, ausgewählt aus der Gruppe bestehend aus 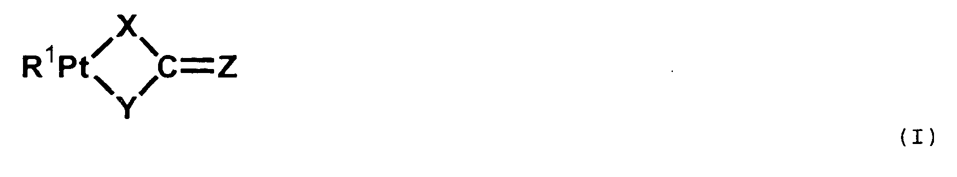 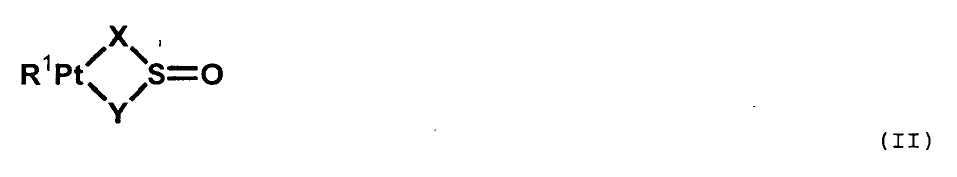 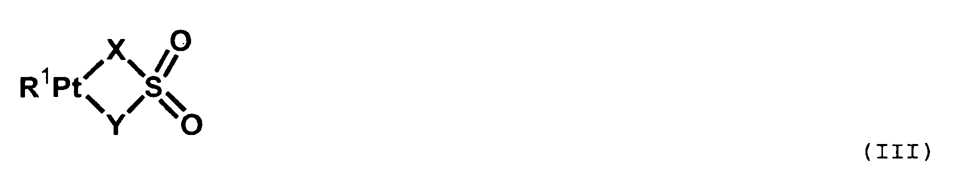 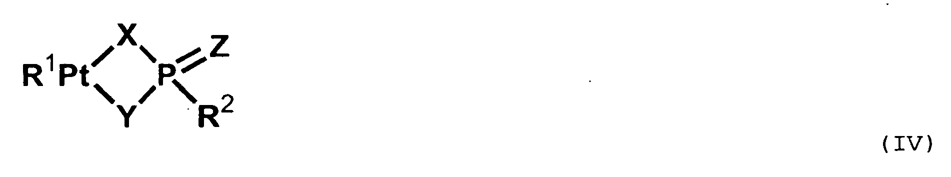 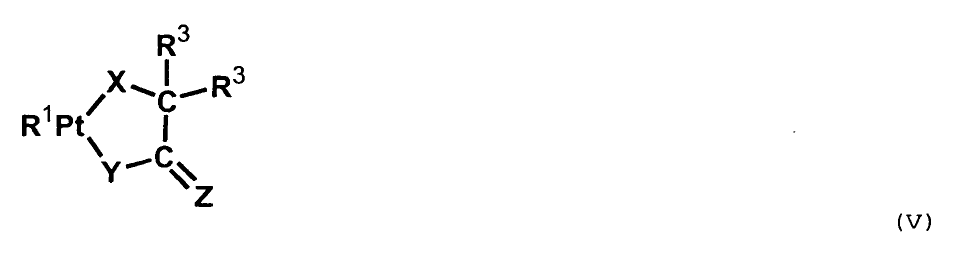 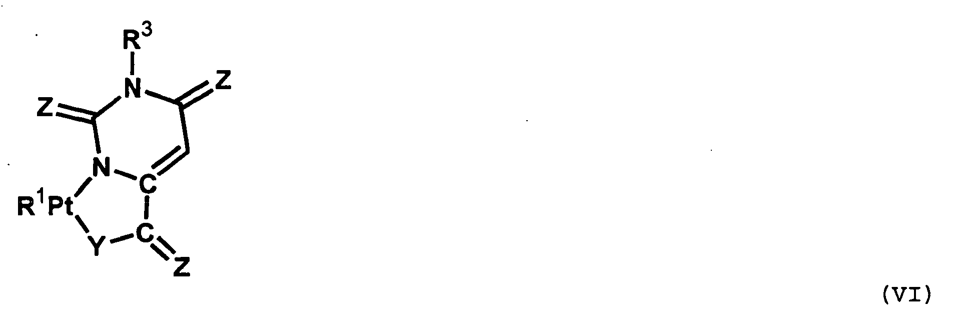
sowie Silane und Siloxane enthaltend zumindest eine der Einheiten der durchschnittlichen allgemeinen Formeln (VII), (VIII) oder (IX) 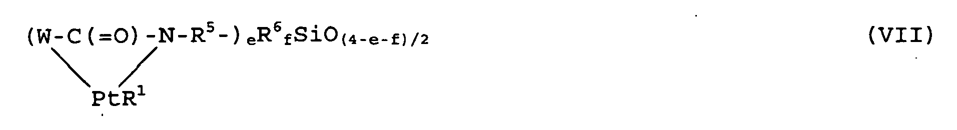 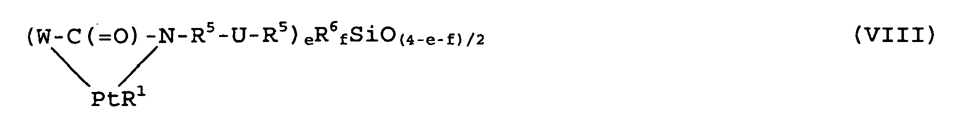 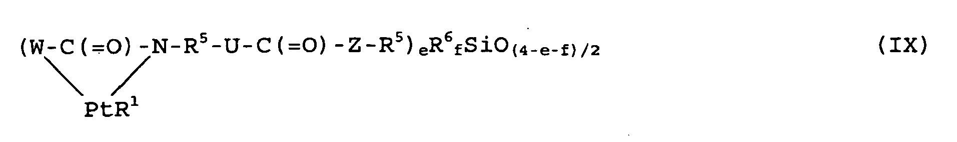 worin
- R¹: ein gegebenenfalls substituiertes Dien, das durch mindestens eine π-Bindung mit Platin verbunden ist und eine unverzweigte oder verzweigte Kette mit 4 bis 18 Kohlenstoffatomen, einen Bicyclus oder einen cyclischen Ring mit 6 bis 28 Kohlenstoffatomen darstellt,
- e: 0, 1, 2 oder 3
- f: 0, 1, 2 oder 3, mit der Maßgabe, dass e + f für Silane gleich 4 ist und für Siloxane 0, 1, 2 oder 3 ist und dass pro Molekül mindestens eine Einheit mit e ungleich 0 enthalten ist,
- U: O, NR², N-C(=O)-N(H)R²
- W: NR⁷, C(R³)-CO₂R³, C(R³)-C(=Z)-R³, S, O, C(R³)₂
- X: NR² C(R³)-CO₂R³, C(R³)-C(=Z)-R³, S, O, C(R³)₂
- Y: NR², C(R³)-CO₂R³, C(R³)-C(=Z)-R³, S, O, C(R³)-CN
- Z: O, S, Se, NR², CR⁴₂
- R²: unabhängig voneinander Wasserstoff, einwertige Kohlenwasserstoffreste mit 1 bis 24 Kohlenstoffatomen, die gegebenenfalls substituiert sein und Heteroatome in der Ketten oder den Cyclen enthalten können,
- R³: unabhängig voneinander Wasserstoff, oder einwertige, gegebenenfalls substituierte Kohlenwasserstoffreste mit 1 bis 28 Kohlenstoffatomen,
- R⁴: unabhängig voneinander Wasserstoff, oder einwertige, gegebenenfalls substituierte Kohlenwasserstoffreste mit 1 bis 24 Kohlenstoffatomen, mit der Maßgabe, dass mindestens ein Rest -CN, -CO₂R³ , -C(=O)-R³ , -NO₂, -C(=O)-H oder Halogen ist,
- R⁵: unabhängig voneinander zweiwertige, gegebenenfalls substituierte Kohlenwasserstoffreste mit 1 bis 26 Kohlenstoffatomen,
- R⁶: unabhängig voneinander einwertige, gegebenenfalls substituierte Kohlenwasserstoffreste mit 1 bis 20 Kohlenstoffatomen und
- R⁷: unabhängig voneinander einwertige, gegebenenfalls substituierte Kohlenwasserstoffreste mit 1 bis 20 Kohlenstoffatomen
bedeutet, dadurch gekennzeichnet, dass zumindest die Bestandteile (A), (B), (C) und (D) vermischt werden.

Bevorzugt wird die Zusammensetzung einkomponentig ausgeführt. Dazu werden zumindest die Bestandteile (A), (B) und (D) in einer Komponente vermischt. In einer weiteren bevorzugten Ausführungsform werden die Bestandteile (C) und (D) in einer Komponente vermischt. Obwohl die erfindungsgemäßen vernetzbaren Polyorganosiloxanmassen vorzugsweise einkomponentig ausgeführt werden, können diese auch als zwei- oder mehrkomponentigen Zusammensetzungen verwendet werden. Beispielsweise werden in einer ersten Komponente die Bestandteile (A) und (D) und in der zweiten Komponente (B) und gegebenenfalls (A) eingesetzt.

Gegenstand der vorliegenden Erfindung sind auch Siliconelastomere, die durch Vernetzung der erfindungsgemäßen vernetzbaren Polyorganosiloxanmassen erhalten werden. Die erfindungsgemäßen vernetzbaren Massen haben den Vorteil, dass sie in einem einfachen Verfahren unter Verwendung leicht zugänglicher Ausgangsstoffe und damit wirtschaftlich hergestellt werden können.

Die erfindungsgemäßen vernetzbaren Massen haben zudem den Vorteil, dass sie als einkomponentige Formulierung bei 25°C und Umgebungsdruck eine gute Lagerstabilität aufweisen und erst bei erhöhter Temperatur sehr rasch vernetzen.

Die erfindungsgemäßen vernetzbaren Massen haben weiterhin den Vorteil, dass sie trotz der guten Lagerstabilität bei Raumtemperaturlagerung, entsprechend langer Topfzeit, niedrige Anspringtemperaturen aufweisen.

Die erfindungsgemäßen vernetzbaren Massen haben den Vorteil, dass sie trotz der guten Lagerstabilität (Topfzeit) bei Raumtemperaturlagerung hohe Vernetzungsgeschwindigkeiten bei erhöhten Temperaturen aufweisen.

Die erfindungsgemäßen Siliconmassen haben den Vorteil, dass diese bei zweikomponentiger Formulierung nach Vermischen der beiden Komponenten eine vernetzungsfähige Siliconmasse ergeben, deren Verarbeitbarkeit über einen langen Zeitraum hinweg bei 25°C und Umgebungsdruck bestehen bleibt, entsprechend sehr langer Topfzeiten, und erst bei erhöhter Temperatur sehr rasch vernetzt.

Bei der Herstellung der erfindungsgemäßen vernetzbaren Massen ist es von großem Vorteil, dass sich der Platinkatalysator (D) leicht einarbeiten lässt.

Die erfindungsgemäßen Massen haben den Vorteil, dass die vernetzten Siliconkautschuke eine ausgezeichnete Durchsichtigkeit aufweisen.

Die erfindungsgemäßen Massen haben den weiteren Vorteil, dass die vernetzten Siliconkautschuke keinen Gelbstich/Vergilbung aufweisen, wie das oft bei Verwendung von anderen Platinkatalystoren beobachtet wird.

Die erfindungsgemäßen Massen haben den Vorteil, dass die Platinkatalysatoren (D) am Ende der Vernetzungsreaktion keine Platinkolloide bilden.

Die erfindungsgemäßen Massen haben ferner den Vorteil, dass die Hydrosilylierungsreaktion sich nicht mit der Reaktionsdauer verlangsamt.

Die erfindungsgemäßen Platin-Komplexe sind nützlich als Katalysatoren für die wohlbekannte Hydrosilylierungsreaktion in der Organosiliciumchemie, als Katalysator für die Hydrierung ungesättigter organischer Verbindungen oder Polymere und zur Oligomerisierung von Acetylen und anderen Alkinen.

Die erfindungsgemäßen Platin-Katalysatoren haben den weiteren Vorteil, dass endständige Doppelbindungen bei der Hydrosilylierung nicht nach innen umlagern, wodurch schwachreaktives isomerisiertes Ausgangsprodukt verbleiben würde.

Die erfindungsgemäßen Platin-Katalysatoren haben ferner den Vorteil, dass keine Platin-Kolloide gebildet werden und durch ihren Einsatz keine Verfärbungen resultieren.

Weiterhin ist ein Verfahren zur Herstellung von Siliconelastomeren Gegenstand der vorliegenden Erfindung, dadurch gekennzeichnet, dass die erfindungsgemäßen vernetzbaren Polyorganosiloxanmassen vorzugsweise unter Einfluss von Wärme oder Strahlung, wie beispielsweise UV- oder Mikrowellenstrahlung, vernetzt werden. Besonders bevorzugt ist Vernetzung der erfindungsgemäßen vernetzbaren Polyorganosiloxanmassen bei Temperaturen von 25 bis 200°C, insbesondere bei 50 bis 150°C.

Die erfindungsgemäß erhaltenen Siliconelastomere können für alle Zwecke eingesetzt werden, für die auch bisher zu Elastomeren vernetzbare Organopolysiloxanmassen bzw. Elastomere verwendet wurden. Die erfindungsgemäß erhaltenen Siliconelastomere eignen sich besonders für die Verwendung als Einbettungsmassen für elektrische oder elektronische Vorrichtungen, als Abformmassen, Beschichtungsmassen und für die Herstellung von Formkörpern, wie beispielsweise im Spritzgussverfahren, Vakuumextrusionsverfahren, Extrusionsverfahren, Formgießen und Formpressen.

Die Herstellung der erfindungsgemäßen Platinverbindungen sind beispielsweise für einige Ausführungsformen in J. Organomet. Chem. 526 (1996) 303-312, J. Organomet. Chem. 556 (1998)75-88, J. Chem. Soc. Dalton Trans. (1992) 409, J. Chem. Soc. Dalton Trans. (1994) 3085 und Chem. Commun. (1996) 211 beschrieben.

Ein weiterer Gegenstand der vorliegenden Erfindung ist ein Verfahren zur Herstellung der erfindungsgemäßen Platinkatalysatoren (D) der allgemeinen Formeln (VII), (VIII) und (IX), dadurch gekennzeichnet, dass
a) CODPtCl₂, der entsprechende Ligand und Silberoxid in einem Lösungsmittel vorgelegt werden,
b) unter Wärmezufuhr die Reaktionsmischung zur Umsetzung gebracht wird und
c) nach Abkühlen der Reaktionsmischung die Silberverbindung entfernt wird,
worin
CODPtCl₂ Dichloro-(cycloocta-1,5-dien)platin(II) bedeutet.

In einer bevorzugten Ausführungsform wird die Lösung abschließend bis zur Trockene eingeengt und das Produkt gegebenenfalls umkristallisiert. Alle Reaktionen werden dabei vorzugsweise unter Schutzgasatmosphäre, beispielsweise Stickstoff, Helium oder Argon, durchgeführt. Als Lösungsmittel sind alle aprotonischen Lösungsmittel, insbesondere Dichlormethan, Aceton und Tetrahydrofuran THF, besonders chlorierte Lösungsmittel und insbesondere Dichlormethan oder Chloroform bevorzugt. Vorzugsweise erfolgt die Umsetzung unter Erhitzen mit Rückfluss. Alternativ kann als Base anstelle von Silberoxid Natriumhydroxid oder Kaliumhydroxid in einem Lösungsmittelgemisch aus Dichlormethan und THF verwendet werden.

### Beispiele:

In den nachfolgenden Beispielen, die die prinzipielle Ausführbarkeit der Erfindung belegen ohne jedoch einschränkenden Charakter zu haben, wurde bei den Reaktionen überwiegend Silberoxid (Ag₂O) als Base verwendet, obwohl andere Basen auch möglich sind. Es wurde entweder kommerziell erhältliches Silberoxid (beispielsweise von der Fa. ALDRICH GmbH) oder frisch hergestelltes Silberoxid verwendet, letzteres wurde durch Umsetzung von Silbernitrat mit Natriumhydroxid unter Schutzgasatmosphäre hergestellt. Dazu wurden 4,40 Teile Silbernitrat in 40 Teile Wasser gelöst und mit einer Lösung aus 1,10 Teile Natriumhydroxid, in 40 Teile Wasser gelöst, zugetropft. Nach 2 Stunden Rühren und Stehen lassen über Nacht wurde der gebildete Niederschlag Ag₂O über eine Glasfritte abfiltriert und mit 100 ml Wasser, 100 ml Methanol und 50 ml Dichlormethan nachgewaschen. Anschließend wurde das Silberoxid im Vakuum bis zur Gewichtskonstanz getrocknet.

Alle Lösungsmittel wurden ohne weiter Trocknung, wie gekauft eingesetzt. Alle Angaben auf Teile sind als Gewichtsteile zu verstehen.

CODPtCl₂ und nbdPtCl₂ stehen für Dichloro-(cycloocta-1,5-dien)platin(II) bzw. Dichloro-(2,5-norbornadien)-platin(II).

Allgemeine Herstellvorschrift für die Platinkomplexe: Alle Reaktionen wurden unter Schutzgasatmosphäre, vorzugsweise Stickstoff oder Argon, durchgeführt. CODPtCl₂, Ligand, Silberoxid und 50 bis 200 Teile Dichlormethan wurden 4 bis 18 Stunden unter Rückfluss erhitzt. Abschließend wurde die Mischung auf Raumtemperatur abgekühlt und filtriert, um die Silberverbindungen zu entfernen. Die Lösung wurde zur Trockene eingeengt und das Produkt aus Dichlormethan-Diethylether oder Dichlormethan-Heptan umkristallisiert.

### Katalysator 1:

0,5 Teile CODPtCl₂, 0,29 Teile N,N-Diphenylharnstoff, 2,1 Teile Silberoxid und 50 Teile Dichlormethan wurden 7 Stunden unter Rückfluss erhitzt. Nach der zuvor beschriebenen allgemeinen Aufarbeitung wurden 0,42 Teile eines Platinkomplexes der Formel 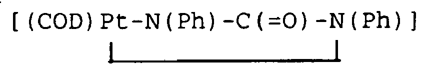 erhalten.

### Katalysator 2:

Die Herstellung erfolgt analog der Herstellung des Katalysators 1, mit den Ausnahmen, dass anstelle des CODPtCl₂ das nbdPtCl₂. verwendet wurde und das Zielprodukt durch Extrahieren mittels Soxhlet-Apparatur gewonnen wurde. Es wurden 0,2 Teile des Zielprodukts erhalten, welches die Struktur 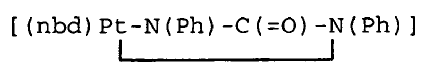 aufweist.

### Katalysator 3:

1,0 Teile CODPtCl₂, 0,60 Teile N-(n-Hexyl)-N-phenylharnstoff, 2,9 Teile frisch gemäß des zuvor genannten Verfahrens hergestellten Silberoxid und 200 Teile Dichlormethan wurden 6 Stunden unter Rückfluss erhitzt. Nach der oben beschriebenen Aufarbeitung wurden 1,3 Teile eines Platinkomplexes der Formel 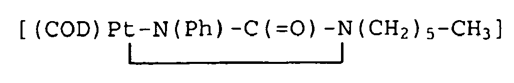 erhalten.

### Katalysator 4:

1,5 Teile CODPtCl₂, 0,61 Teile N,N-Diacetylharnstoff, 2,9 Teile frisch, gemäß des zuvor genannten Verfahrens, hergestelltes Silberoxid und 200 Teile Dichlormethan wurden 7 Stunden unter Rückfluss erhitzt. Nach der oben beschriebenen Aufarbeitung wurden 0,95 Teile eines Platinkomplexes der Formel 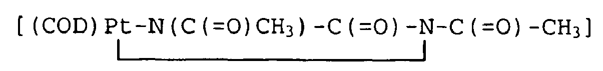 erhalten.

### Katalysator 5:

1,0 Teile CODPtCl₂, 0,45 Teile Phenylphosphonsäure, 2,9 Teile kommerziell erhältliches Silberoxid und 50 Teile Dichlormethan wurden 7,5 Stunden unter Rückfluss erhitzt. Nach der Aufarbeitung wurden 0,9 Teile eines Platinkomplexes der Formel 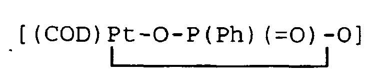 erhalten.

### Katalysator 6:

1,5 Teile CODPtCl₂, 0,75 Teile N-Acetyl-N'-phenylharnstoff 2,9 Teile frisch gemäß des zuvor beschriebenen Verfahrens hergestellten Silberoxid und 200 Teile Dichlormethan wurden 7 Stunden unter Rückfluss erhitzt. Nach der Aufarbeitung wurden 1,0 Teile eines Platinkomplexes der Formel 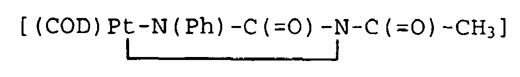 erhalten.

### Katalysator 7:

0,5 Teile CODPtCl₂, 0,16 Teile N-Acetylglycin 2,9 Teile frisch gemäß des zuvor beschriebenen Verfahrens hergestellten Silberoxid und 50 Teile Dichlormethan wurden 7 Stunden unter Rückfluss erhitzt. Nach der Aufarbeitung wurden 0,46 Teile eines Platinkomplexes der Formel 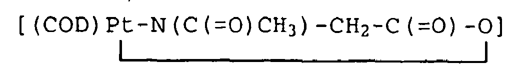 erhalten.

### Katalysator 8:

0,102 Teile CODPtCl₂, 0,042 Teile D,L- Mandelsäure, 0,807 Teile Silberoxid und 200 Teile Dichlormethan wurden 5 Stunden unter Rückfluss erhitzt. Nach der Aufarbeitung wurden 0,100 Teile eines Platinkomplexes der Formel 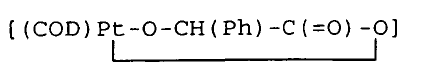 erhalten.

### Katalysator 9:

2,65 Teile Phenylisocyanat werden in 10 Teile Diethylether gelöst und bei Raumtemperatur in eine Lösung aus 21,15 Teile eines Poly(dimethyl)siloxans mit Aminopropyldimethylsiloxy-Endgruppen und 20 Dimethylsiloxy-Gruppen in der Kette (die Herstellung dieser Verbindungen sind dem Fachmann bekannt) und 50 Teile Diethylether zugetropft. Nach 2 Stunden wird das Lösungsmittel im Vakuum entfernt und es werden 20,7 Teile eines Öls (Ligand 1) mit der folgenden Formel erhalten: Ph-N(H)-C(=O)-N(H)-(CH₂)₃-(Si(CH₃)₂-O)₂₁-Si(CH₃)₂-(CH₂)₃-N(H)-C(=O)-N(H)-Ph.

Ein Teil CODPtCl₂, 3,16 Teile des Liganden 1, 2,9 Teile eines frisch hergestellten Silberoxid und 200 Teile Dichlormethan wurden 3 Stunden unter Rückfluss erhitzt. Nach der Aufarbeitung wurden 3,9 Teile eines harzartigen Produktes mit der Formel

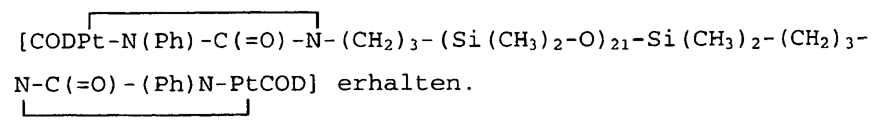

### Katalysator 10:

5,24 Teile Phenylisocyanat werden in 20 Teile Diethylether gelöst und bei Raumtemperatur in eine Lösung aus 54,4 Teile eines Poly(dimethyl)siloxans mit Aminoethylaminopropyldimethylsiloxy-Endgruppen und 47 Dimethylsiloxy-Gruppen in der Kette (die Herstellung dieser Verbindungen sind dem Fachmann bekannt) und 50 Teile Diethylether zugetropft. Nach 1 Stunde wird das Lösungsmittel im Vakuum entfernt und es werden 59,3 Teile eines Öls (Ligand 2) mit der folgenden Formel erhalten: Ph-N(H)-C(=O)-N(H)-(CH₂)₂-N[-C(=O)-N(H)Ph]-(CH₂)₃-(Si(CH₃)₂-O)₄₈-Si(CH₃)₂-(CH₂)₃-N[-C(=O)N(H)Ph]-(CH₂)₂N(H)-C(=O)-N(H)-Ph.

Ein Teil CODPtCl₂, 7,94 Teile des Liganden 2, 2,9 Teile eines frisch hergestellten Silberoxid und 200 Teile Dichlormethan wurden 6 Stunden unter Rückfluss erhitzt. Nach der Aufarbeitung wurden 8,3 Teile eines hochviskosen Produktes mit der Formel 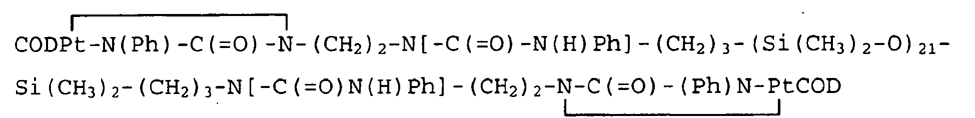 erhalten.

### Katalysator 11:

6,15 Teile m-Anisidin werden in 50 Teile Diethylether gelöst und bei Raumtemperatur in eine Lösung aus 10 Teile Toluylen-2,4-diisocyanat in 130 ml Diethylether gelöst zugetropft. Während der Reaktion entsteht wie weißer Niederschlag, der abgefrittet, mit Heptan gewaschen und im Vakuum getrocknet wird (Ligand 3).

6,23 Teile des Ligand 3 werden in 80 ml getrocknetem THF gelöst und mit einer Lösung aus 21,15 Teile eines Poly(dimethyl)siloxans mit Aminopropyldimethylsiloxy-Endgruppen und 20 Dimethylsiloxy-Gruppen in der Kette (die Herstellung dieser Verbindungen sind dem Fachmann bekannt) und 30 Teile THF versetzt. Nach 3 Stunden wird das Lösungsmittel im Vakuum entfernt und es werden 25,5 Teile eines Öls (Ligand 4) mit der Formel CH₃O-C₆H₃-N(H)-C(=O)-N(H)-C₆H₃(-CH₃)-N(H)-C(=O)-N(H)-(CH₂)₃-(Si(CH₃)₂-O)₂₁-Si(CH₃)₂-(CH₂)₃-N(H)-C(=O)-N(H)-C₆H₃(-CH₃)-N(H)-C(=O)-N(H)-C₆H₃-OCH₃ erhalten.

Ein Teil CODPtCl₂, 3,66 Teile des Ligand 4, 3,2 Teile Silberoxid und 200 Teile Aceton wurden 6 Stunden unter Rückfluss erhitzt. Nach der Aufarbeitung wurden 4,4 Teile eines harzartigen Produktes mit der Formel

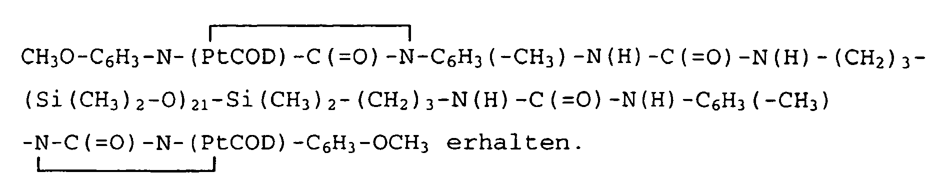

### Beispiel 1:

50,0 Teile eines Vinyldimethylsiloxy-terminierten Polydimethylsiloxans mit einer Viskosität von 20 Pa·s, 0,033 Teile 1-Ethinyl-1-cyclohexanol und 1 Teil SiH-Vernetzer wurden mit Hilfe eines Rührers der Firma Janke & Kunkel IKA-Labortechnik, TYP RE 162 homogen vermischt, wobei der SiH-Vernetzer ein Mischpolymerisat aus Dimethylsiloxy- und Methylhydrogensiloxy- und Trimethylsiloxy-Einheiten mit einer Viskosität von 330 mPa·s und einem Gehalt an Si-gebundenem Wasserstoff von 0,46 Gew.-% war. Anschließend wurden 0,0014 Teile Katalysator 1 entsprechend einem Gehalt von 10 ppm Pt bezogen auf die Gesamtmasse gelöst in 0,5 ml Methylenchlorid bei Raumtemperatur eingerührt.

Die Beispiele 2 bis 11 entsprechen dem Beispiel 1 nur, wobei unterschiedliche Katalysatoren verwendet wurden. Die Mischungen sind aus den Tabellen 1a und 1b zu entnehmen. Die Menge der eingesetzten Katalysatoren ergaben jeweils 10 ppm Pt in der Gesamtmasse.

### Beispiel 12:

Die in Beispiel 1 beschriebene Verfahrensweise wird wiederholt mit der Abänderung, dass vor der Katalysatorzugabe 47 mg 3-Methyl-1-dodecin-3-ol anstelle des Ethinylcyclohexanols eingerührt wurden.

### Vergleichsbeispiel 1

Die in Beispiel 1 beschriebene Verfahrensweise wird wiederholt mit der Abänderung, dass anstelle von Katalysator 1 10 ppm Platin als Platin-Divinyltetramethyldisiloxan-Komplex in Vinylterminiertem Polydimethylsiloxan verwendet wurden.

### Vergleichsbeispiel 2

Die in Beispiel 1 beschriebene Verfahrensweise wird wiederholt mit der Abänderung, dass anstelle von Katalysator 1 0,001 Teile 1,5-Cyclooctadienplatindichlorid verwendet wurden.

### Beispiel 13:

In einem Laborkneter wurden 255 Masseteile eines Vinyldimethylsiloxy-terminierten Polydimethylsiloxans mit einer Viskosität von 20 Pa·s vorgelegt, auf 150°C aufgeheizt und mit 180 Masseteilen einer hydrophoben pyrogenen Kieselsäure mit einer spezifischen Oberfläche nach BET von 300 m²/g und einem Kohlenstoffgehalt von 3,95 Gew.-%, versetzt. Es entstand eine hochviskose Masse, die anschließend mit 165 Masseteile des oben genannten Polydimethylsiloxans verdünnt wurde. Durch Kneten unter Vakuum (10 mbar) bei 150°C wurden während einer Stunde flüchtige Bestandteile entfernt.

487,29 Teile der so hergestellten Grundmasse wurden auf einer Walze bei einer Temperatur von 25°C mit 0,160 Teile 1-Ethinyl-1-cyclohexanol, 10,55 Teile SiH-Vernetzer und 2,0 Teile Katalysatorbatch zu einer homogenen Masse vermischt, wobei der SiH-Vernetzer ein Mischpolymerisat aus Dimethylsiloxy- und Methylhydrogensiloxy- und Trimethylsiloxy-Einheiten mit einer Viskosität von 330 mPa·s und einem Gehalt an Si-gebundenem Wasserstoff von 0,46 Gew.-% war, und der Katalysatorbatch eine Mischung aus oben genanntem Vinylpolydimethylsiloxan und Katalysator 1, dessen Herstellung oben beschrieben ist, (5 ppm Platin-Gehalt bezogen auf die gesamte Masse) war.

### Beispiel 14:

589,4 Teile eines Vinyldimethylsiloxy-terminierten Polydimethylsiloxans mit im Mittel drei Vinylgruppen in der Kette und einer Brabender-Plastizität von 630 mkp entsprechend einer mittleren Molmasse von circa 500.000 g/mol wurden mit 252,6 Teile einer hydrophoben pyrogenen Kieselsäure mit einer Oberfläche nach BET von 300 m²/g und einem Kohlenstoffgehalt von 3,95 Gew.-%, die in Portionen zudosiert wurde, 4 Stunden in einem Kneter zu einer homogenen Masse vermischt.

100 Teile der so erhaltenen Grundmasse wurden auf einer Walze bei einer Temperatur von 20°C mit 0,05 Teile 1-Ethinylcyclohexan-1-ol, 1,2 Teile SiH-Vernetzer und 0,00066 Teile Katalysator 1, in 1 ml Dichlormethan gelöst, zu einer homogenen Masse vermischt, wobei der SiH-Vernetzer ein Mischpolymerisat aus Dimethylsiloxy- und Methylhydrogensiloxy- und Trimethylsiloxy-Einheiten mit einer Viskosität von 310 mPa·s bei 25°C und einem Gehalt an Si-gebundenem Wasserstoff von 0,46 Gew.-% war.

### Beispiel 15:

Die in Beispiel 14 beschriebene Verfahrensweise wird wiederholt mit der Abänderung, dass als Katalysator 0,0013 Teile Platinkomplex 6 - in 1 Teil Dichlormethan gelöst - verwendet wurde.

### Beispiel 16:

Die in Beispiel 14 beschriebene Verfahrensweise wird wiederholt mit der Abänderung, dass als Katalysator 0,0011 Teile Platinkomplex 7 - in 1 Teil Dichlormethan gelöst - verwendet wurde.

Die thermischen Härtungseigenschaften der in den Beispielen 1 bis 12 sowie Vergleichsbeispiele 1 und 2 hergestellten Polyorganosiloxanmassen wurden mit einem Dynamic Analyzer RDA II, der Fa. Rheometrics mit einer Aufheizkurve von 30 bis 200°C und mit einer Heizrate von 5°C/Minute gemessen. Die Temperatur, die dem 4%-Wert des maximalen Drehmomentes entspricht, wurde als Anspringtemperatur a_{T} definiert. Zur quantitativen Ermittlung der Lagerbeständigkeit wurden die hergestellten Formulierungen bei Raumtemperatur (RT) gelagert, wobei die Zeitdauer, jeweils gemessen in Tagen, bis zur Verdoppelung des Anfangswertes der Viskosität ermittelt wurde. Die Messergebnisse werden in den Tabellen 1a und 1b dargestellt.

**Tabelle 1a**

| Beispiel | 1 | 2 | 3 | 4 | 5 | 6 | 7 |
|---|---|---|---|---|---|---|---|
| Katalysator | 1 | 2 | 3 | 4 | 5 | 6 | 7 |
| a_{T} [°C] | 126 | 127 | 105 | 117 | 103 | 108 | 106 |
| Lagerung bei RT [Tagen] | >300 | >100 | >30 | >40 | >20 | >40 | >40 |

**Tabelle 1b**

| Beispiel | 8 | 9 | 10 | 11 | 12 | V1 | V2 |
|---|---|---|---|---|---|---|---|
| Katalysator | 8 | 9 | 10 | 11 | 3 | | |
| a_{T} [°C] | 105 | 104 | 105 | 118 | 108 | 100 | 98 |
| Lagerung bei RT [Tagen] | >30 | >50 | >50 | >70 | >50 | 10 | 3 |

Die thermischen Härtungseigenschaften der in den Beispielen 13 bis 16 hergestellten Polyorganosiloxanmassen wurden mit einem Goettfert-Elastograph gemessen. Die Anspringtemperatur a_{T} wurde mit einer Heizrate von 10°C/min bestimmt. Dabei wurde die Temperatur, die dem 4%-Wert des maximalen Drehmomentes entspricht, als Anspringtemperatur a_{T} definiert.

Die Bestimmung des t₉₀-Wertes erfolgte nach DIN 53529 T3. Die Dauer vom Beginn der Härtung bis 90% (= t₉₀-Wert) des maximalen Drehmoments wurde dabei bei 150°C ermittelt. Die Messergebnisse werden in Tabelle 2 aufgelistet.

Zur quantitativen Ermittlung der Lagerbeständigkeit wurden die hergestellten Formulierungen bei Raumtemperatur (RT) und 40°C gelagert, wobei die Zeitdauer, jeweils gemessen in Tagen, bis zur Verdoppelung des Anfangswertes der Viskosität ermittelt wurde. Die Messergebnisse werden in Tabelle 2 dargestellt.

**Tabelle 2**

| Beispiele | 13 | 14 | 15 | 16 |
|---|---|---|---|---|
| a_{T} [°C] | 122 | 126 | 123 | 121 |
| t₉₀ [s] | 43 | 49 | 41 | 34 |
| Lagerung bei RT [Tage] | >80 | >80 | >80 | >80 |
| Lagerung bei 40°C [Tage] | >10 | >10 | >10 | >10 |

## Patentansprüche

1. Vernetzbare Polyorganosiloxanmassen, enthaltend
(A) Polyorganosiloxane, die Reste mit aliphatischen Kohlenstoff-Kohlenstoff-Mehrfachbindungen aufweisen,
(B) Polyorganosiloxane mit Si-gebundenen Wasserstoffatomen oder anstelle von (A) und (B)
(C) Polyorganosiloxane, die SiC-gebundene Reste mit aliphatischen Kohlenstoff-Kohlenstoff-Mehrfachbindungen und Si-gebundene Wasserstoffatome aufweisen, und
(D) Platinkatalysator, ausgewählt aus der Gruppe bestehend aus 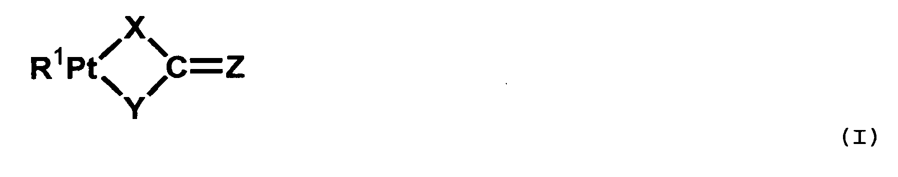 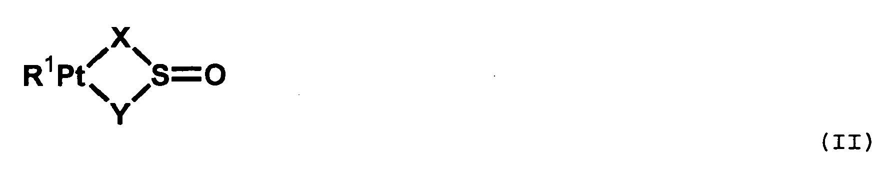 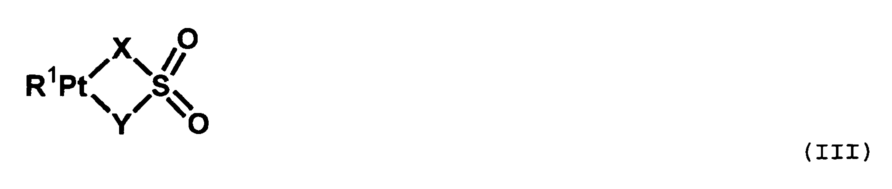 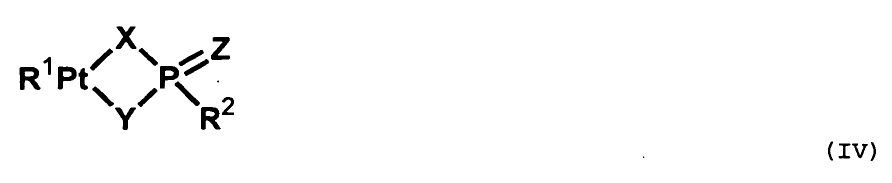 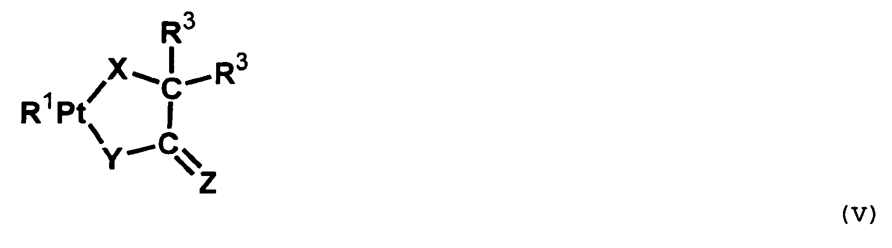 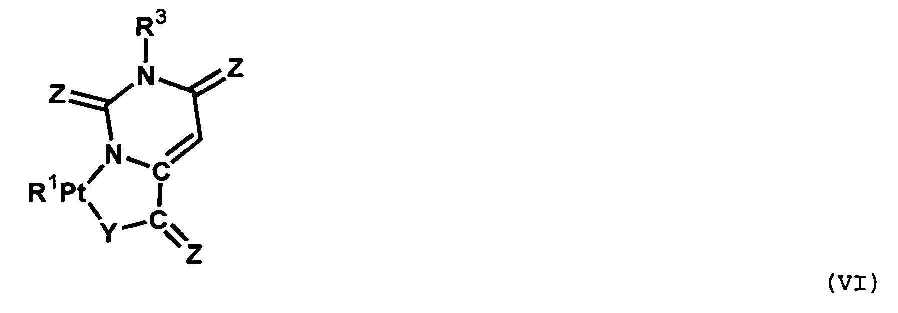
sowie Silane und Siloxane enthaltend zumindest eine der Einheiten der allgemeinen Formeln (VII), (VIII) oder (IX) 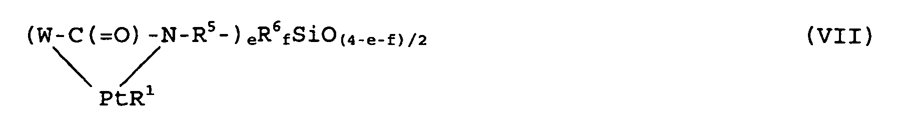 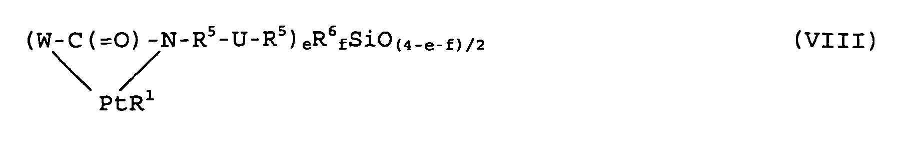 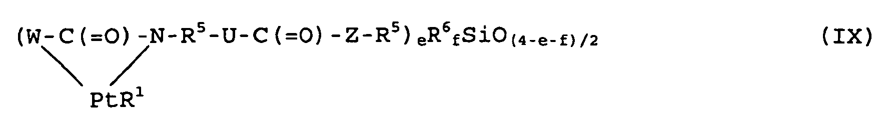 worin
R¹ ein gegebenenfalls substituiertes Dien, das durch mindestens eine n-Bindung mit Platin verbunden ist und eine unverzweigte oder verzweigte Kette mit 4 bis 18 Kohlenstoffatomen, einen Bicyclus oder einen cyclischen Ring mit 6 bis 28 Kohlenstoffatomen darstellt,
e 0, 1, 2 oder 3
f 0, 1, 2 oder 3, mit der Maßgabe, dass e + f für Silane gleich 4 ist und für Siloxane 0, 1, 2 oder 3 ist und dass pro Molekül mindestens eine Einheit mit e ungleich 0 enthalten ist,
U O, NR², N-C(=O)-N(H)R²
W NR⁷, C(R³)-CO₂R³, C(R³)-C(=Z)-R³, S, O, C(R³)₂
X NR², C(R³)-CO₂R³, C(R³)-C(=Z)-R³, S, O, C(R³)₂
Y NR², C(R³)-CO₂R³, C(R³)-C(=Z)-R³, S, O, C(R³)-CN
Z O, S, Se, NR², CR⁴₂
R² unabhängig voneinander Wasserstoff, einwertige Kohlenwasserstoffreste mit 1 bis 24 Kohlenstoffatomen, die gegebenenfalls substituiert sein und oder Heteroatome in der Ketten oder den Cyclen enthalten können,
R³ unabhängig voneinander Wasserstoff, oder einwertige, gegebenenfalls substituierte Kohlenwasserstoffreste mit 1 bis 28 Kohlenstoffatomen,
R⁴ unabhängig voneinander Wasserstoff, oder einwertige, gegebenenfalls substituierte Kohlenwasserstoffreste mit 1 bis 24 Kohlenstoffatomen, mit der Maßgabe, dass mindestens ein Rest -CN, -CO₂R³, -C(=O)-R³, -NO₂, -C(=O)-H oder Halogen ist,
R⁵ unabhängig voneinander zweiwertige, gegebenenfalls substituierte Kohlenwasserstoffreste mit 1 bis 26 Kohlenstoffatome,
R⁶ unabhängig voneinander einwertige, gegebenenfalls substituierte Kohlenwasserstoffreste mit 1 bis 20 Kohlenstoffatome und
R⁷ unabhängig voneinander einwertige, gegebenenfalls substituierte Kohlenwasserstoffreste mit 1 bis 20 Kohlenstoffatome
bedeutet.

2. Vernetzbare Polyorganosiloxanmassen nach Anspruch 1,
**dadurch gekennzeichnet, dass** der Platinkatalysator, ausgewählt wird aus der Gruppe bestehend aus 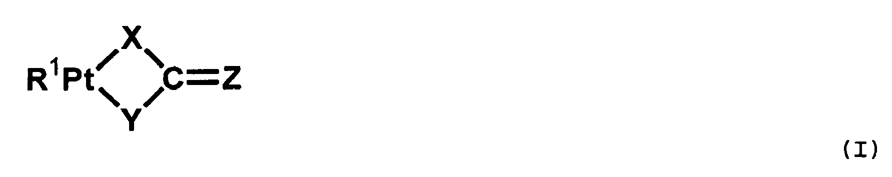 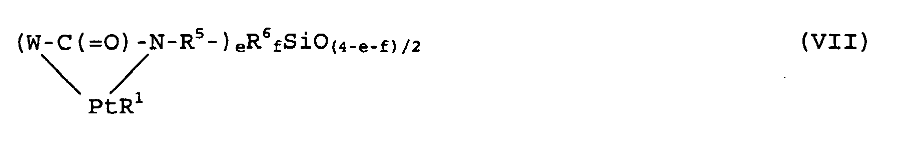 und

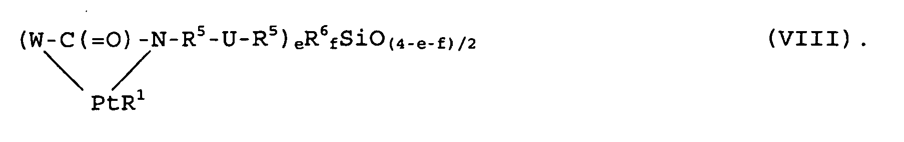

3. Vernetzbare Polyorganosiloxanmassen nach Anspruch 1 oder 2, **dadurch gekennzeichnet, dass** R¹ Cycloocta-1,5-dien ist.

4. Vernetzbare Polyorganosiloxanmassen nach Anspruch 1 oder 2, **dadurch gekennzeichnet, dass** R¹ Bicyclo[2.2.1]hepta-2,5-dien ist.

5. Verfahren zur Herstellung von vernetzbaren Polyorganosiloxanmassen gemäß einem der Ansprüche 1 bis 4, **dadurch gekennzeichnet, dass** die Bestandteile
(A) Polyorganosiloxane, die Reste mit aliphatischen Kohlenstoff-Kohlenstoff-Mehrfachbindungen aufweisen,
(B) Polyorganosiloxane mit Si-gebundenen Wasserstoffatomen oder anstelle von (A) und (B)
(C) Polyorganosiloxane, die SiC-gebundene Reste mit aliphatischen Kohlenstoff-Kohlenstoff-Mehrfachbindungen und Si-gebundene Wasserstoffatome aufweisen, und
(D) Platinkatalysator, ausgewählt aus der Gruppe bestehend aus 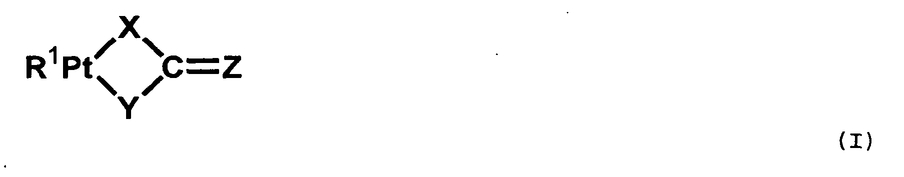 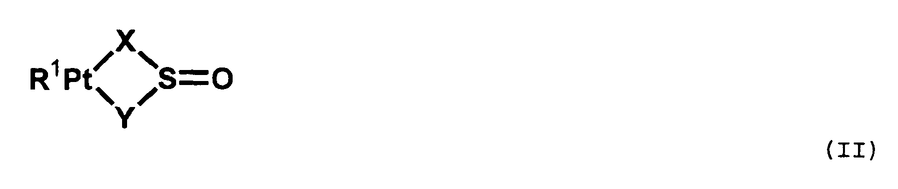 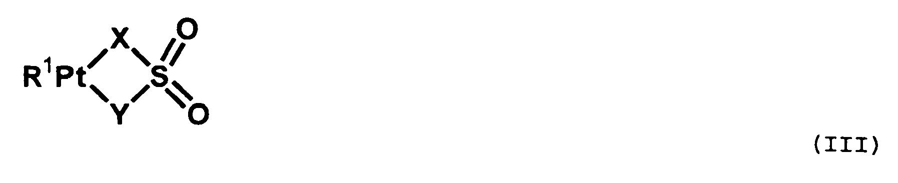 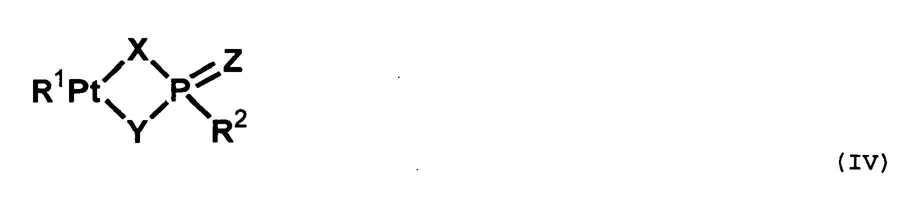 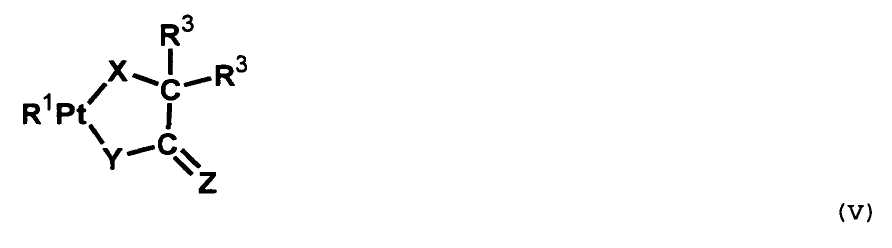 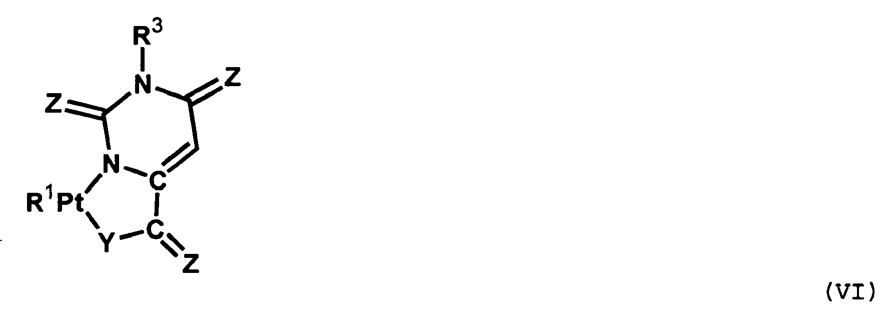 sowie Silane und Siloxane enthaltend zumindest eine der Einheiten der durchschnittlichen allgemeinen Formeln (VII), (VIII) oder (IX) 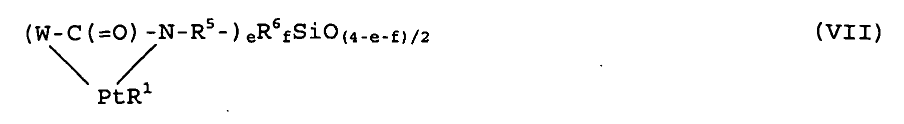 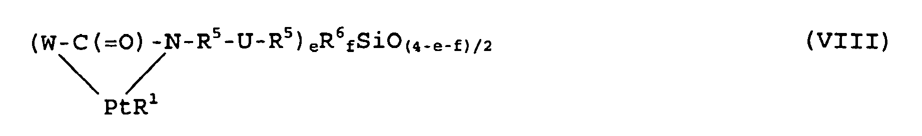 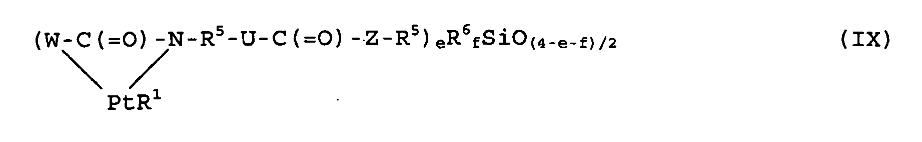
worin
R¹ ein gegebenenfalls substituiertes Dien, das durch mindestens eine π-Bindung mit Platin verbunden ist und eine unverzweigte oder verzweigte Kette mit 4 bis 18 Kohlenstoffatomen, einen Bicyclus oder einen cyclischen Ring mit 6 bis 28 Kohlenstoffatomen darstellt,
e 0, 1, 2 oder 3
f 0, 1, 2 oder 3, mit der Maßgabe, dass e + f für Silane gleich 4 ist und für Siloxane 0, 1, 2 oder 3 ist und dass pro Molekül mindestens eine Einheit mit e ungleich 0 enthalten ist,
U O, NR², N-C(=O)-N(H)R²
W NR⁷, C(R³)-CO₂R³, C(R³)-C(=Z)-R³, S, O, C(R³)₂
X NR², C(R³)-CO₂R³, C(R³)-C(=Z)-R³, S, O, C(R³)₂
Y NR², C(R³)-CO₂R³, C(R³)-C(=Z)-R³, S, O, C(R³)-CN
Z O, S, Se, NR², CR⁴₂
R² unabhängig voneinander Wasserstoff, einwertige Kohlenwasserstoffreste mit 1 bis 24 Kohlenstoffatomen, die gegebenenfalls substituiert sein und Heteroatome in den Ketten oder den Cyclen enthalten können,
R³ unabhängig voneinander Wasserstoff, oder einwertige, gegebenenfalls substituierte Kohlenwasserstoffreste mit 1 bis 28 Kohlenstoffatomen,
R⁴ unabhängig voneinander Wasserstoff, oder einwertige, gegebenenfalls substituierte Kohlenwasserstoffreste mit 1 bis 24 Kohlenstoffatomen, mit der Maßgabe, dass mindestens ein Rest -CN, -CO₂R³, -C(=O)-R³, -NO₂, -C(=O)-H oder Halogen ist,
R⁵ unabhängig voneinander zweiwertige, gegebenenfalls substituierte Kohlenwasserstoffreste mit 1 bis 26 Kohlenstoffatome,
R⁶ unabhängig voneinander einwertige, gegebenenfalls substituierte Kohlenwasserstoffreste mit 1 bis 20 Kohlenstoffatome und
R⁷ unabhängig voneinander einwertige, gegebenenfalls substituierte Kohlenwasserstoffreste mit 1 bis 20 Kohlenstoffatome
bedeutet,
vermischt werden.

6. Verfahren zur Herstellung von Siliconelastomeren **dadurch gekennzeichnet, dass** die vernetzbaren Polyorganosiloxanmassen gemäß einem der Ansprüche 1 bis 4 durch Einfluss von Wärme oder Strahlung vernetzt werden.

7. Silan- oder Siloxan-Platinkatalysator enthaltend zumindest eine Einheit der allgemeinen Formeln (VII), (VIII) oder (IX) 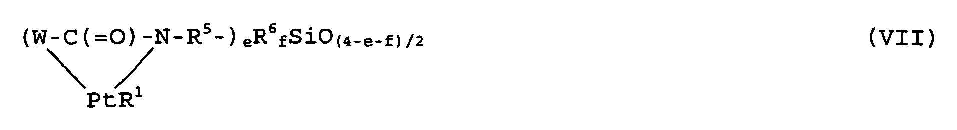 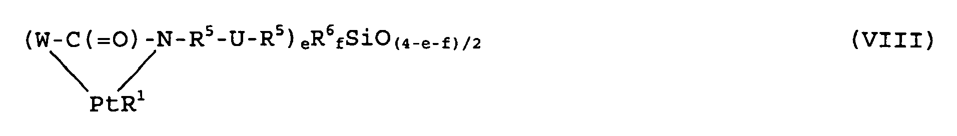 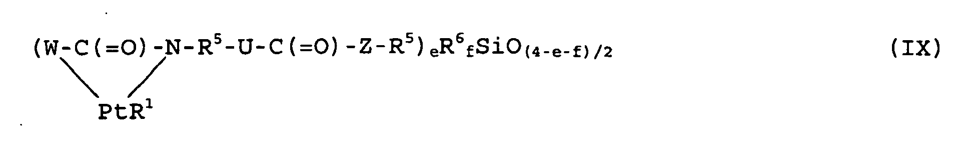 worin
e 0, 1, 2 oder 3
f 0, 1, 2 oder 3, mit der Maßgabe, dass e + f für Silane gleich 4 ist und für Siloxane 0, 1, 2 oder 3 ist und dass pro Molekül mindestens eine Einheit mit e ungleich 0 enthalten ist,
U O, NR², N-C(=O)-N(H)R²
W NR⁷, C(R³)-CO₂R³, C(R³)-C(=Z)-R³, S, O, C(R³)₂
R¹ ein gegebenenfalls substituiertes Dien, das durch mindestens eine π-Bindung mit Platin verbunden ist und eine unverzweigte oder verzweigte Kette mit 4 bis 18 Kohlenstoffatomen, einen Bicyclus oder einen cyclischen Ring mit 6 bis 28 Kohlenstoffatomen darstellt,
R² unabhängig voneinander Wasserstoff, einwertige Kohlenwasserstoffreste mit 1 bis 24 Kohlenstoffatomen, die gegebenenfalls substituiert sein und oder Heteroatome in den Ketten oder den Cyclen enthalten können,
R³ unabhängig voneinander Wasserstoff, oder einwertige, gegebenenfalls substituierte Kohlenwasserstoffreste mit 1 bis 28 Kohlenstoffatomen,
R⁵ unabhängig voneinander zweiwertige, gegebenenfalls substituierte Kohlenwasserstoffreste mit 1 bis 26 Kohlenstoffatome,
R⁶ unabhängig voneinander einwertige, gegebenenfalls substituierte Kohlenwasserstoffreste mit 1 bis 20 Kohlenstoffatome und
R⁷ unabhängig voneinander einwertige, gegebenenfalls substituierte Kohlenwasserstoffreste mit 1 bis 20 Kohlenstoffatome
bedeutet.

8. Platinkatalysator gemäß Anspruch 7, **dadurch gekennzeichnet, dass** R¹ Cycloocta-1,5-dien ist.

9. Platinkatalysator gemäß Anspruch 7, **dadurch gekennzeichnet, dass** R¹ Bicyclo[2.2.1]hepta-2,5-dien ist.

10. Verfahren zur Herstellung der Platinkatalysatoren gemäß Anspruch 7, **dadurch gekennzeichnet, dass**
a) CODPtCl₂, der entsprechende Ligand und Silberoxid in einem Lösungsmittel vorgelegt werden,
b) unter Wärmezufuhr die Reaktionsmischung zur Umsetzung gebracht wird und
c) nach Abkühlen der Reaktionsmischung die Silberverbindungen entfernt wird
worin
CODPtCl₂ Dichloro-(cycloocta-1,5-dien)platin(II) bedeutet.

11. Verfahren zur Herstellung der Platinkatalysatoren gemäß Anspruch 7, **dadurch gekennzeichnet, dass**
a) nbdPtCl₂, der entsprechende Ligand und Silberoxid in einem Lösungsmittel vorgelegt werden,
b) unter Wärmezufuhr die Reaktionsmischung zur Umsetzung gebracht wird und
c) nach Abkühlen der Reaktionsmischung die Silberverbindungen entfernt wird
worin
nbdPtCl₂ Dichloro-(bicyclo[2.2.1]hepta-2,5-dien)platin(II) bedeutet.

## Claims

1. Crosslinkable polyorganosiloxane compositions comprising
(A) polyorganosiloxanes which have radicals having aliphatic carbon-carbon multiple bonds,
(B) polyorganosiloxanes with Si-bonded hydrogen atoms, or, instead of (A) and (B),
(C) polyorganosiloxanes which have SiC-bonded radicals with aliphatic carbon-carbon multiple bonds and Si-bonded hydrogen atoms, and
(D) platinum catalysts selected from the group consisting of 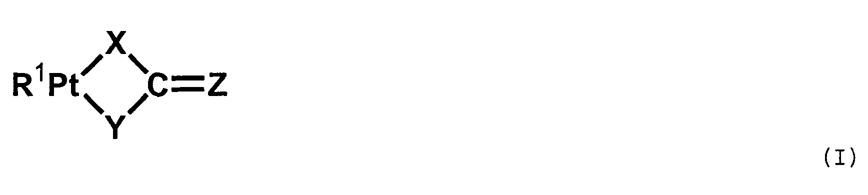 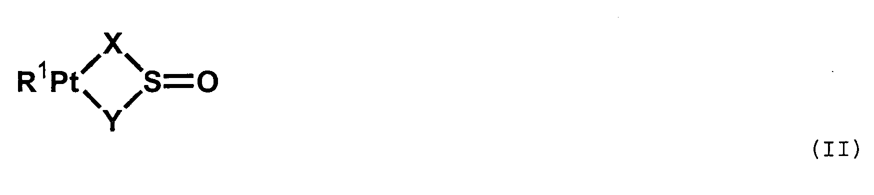 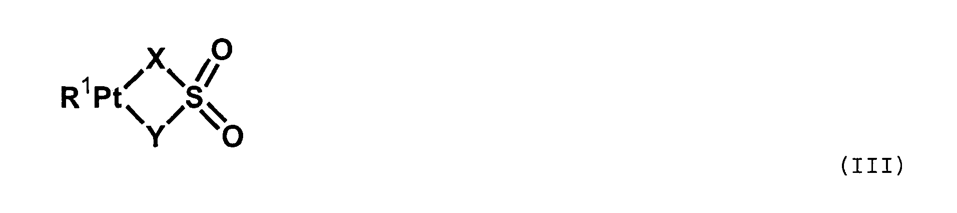 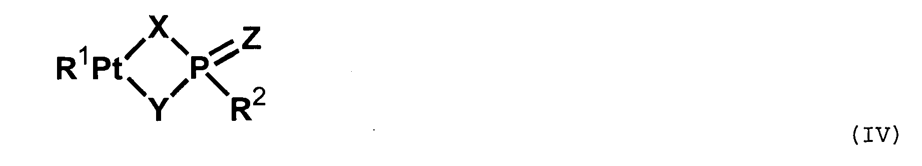 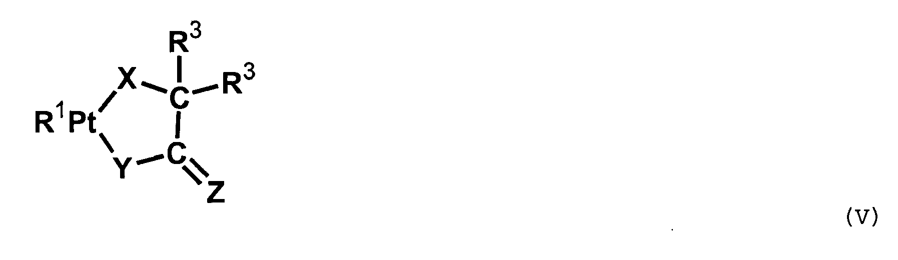 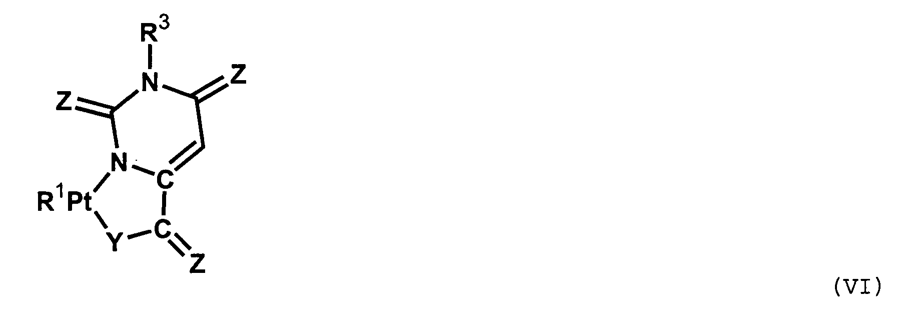 and also silanes and siloxanes comprising at least one of the units of the general formulae (VII), (VIII) or (IX) 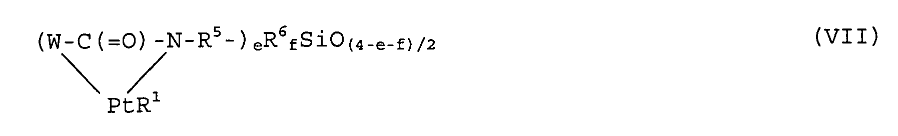 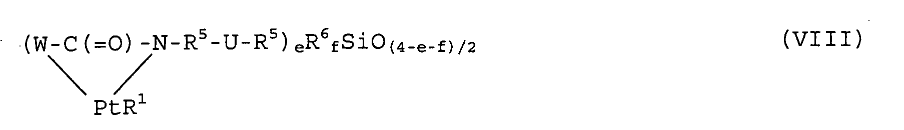 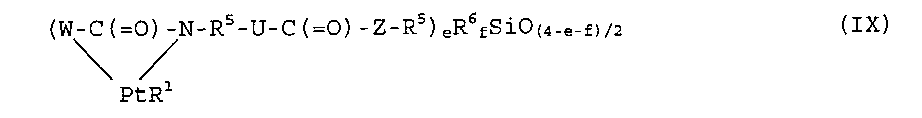
in which
R¹ is an optionally substituted diene which is bonded to platinum by at least one π bond and is an unbranched or branched chain having from 4 to 18 carbon atoms, a bicyclic system or a cyclic ring having from 6 to 28 carbon atoms,
e is 0, 1, 2 or 3,
f is 0, 1, 2 or 3, with the proviso that e + f is 4 for silanes and is 0, 1, 2 or 3 for siloxanes, and that at least one unit where e does not equal 0 is present per molecule,
U is O, NR², N-C(=O)-N(H)R²
W is NR⁷, C(R³)-CO₂R³, C(R³)-C(=Z)-R³, S, O, C(R³)₂
X is NR², C(R³)-CO₂R³, C(R³)-C(=Z)-R³, S, O, C(R³)₂
Y is NR², C(R³)-CO₂R³, C(R³)-C(=Z)-R³, S, O, C(R³)-CN
Z is O, S, Se, NR², CR⁴₂
R² are each independently hydrogen, monovalent hydrocarbon radicals which have from 1 to 24 carbon atoms and may optionally be substituted and/or may contain heteroatoms in the chains or the rings,
R³ are each independently hydrogen, or monovalent, optionally substituted hydrocarbon radicals having from 1 to 28 carbon atoms,
R⁴ are each independently hydrogen, or monovalent, optionally substituted hydrocarbon radicals having from 1 to 24 carbon atoms, with the proviso that at least one radical is -CN, -CO₂R³, -C(=O)-R³, -NO₂, -C(=O)-H or halogen,
R⁵ are each independently divalent, optionally substituted hydrocarbon radicals having from 1 to 26 carbon atoms,
R⁶ are each independently monovalent, optionally substituted hydrocarbon radicals having from 1 to 20 carbon atoms and
R⁷ are each independently monovalent, optionally substituted hydrocarbon radicals having from 1 to 20 carbon atoms.

2. Crosslinkable polyorganosiloxane compositions according to claim 1, **characterized in that** the platinum catalyst is selected from the group consisting of 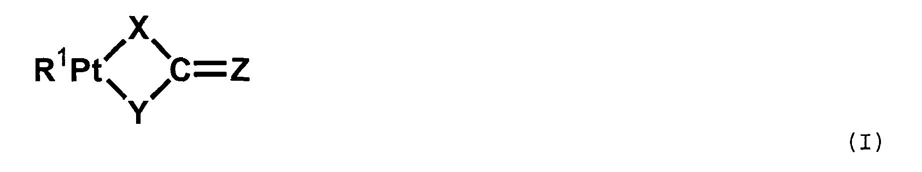 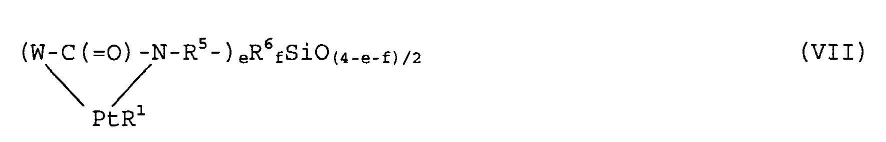 and

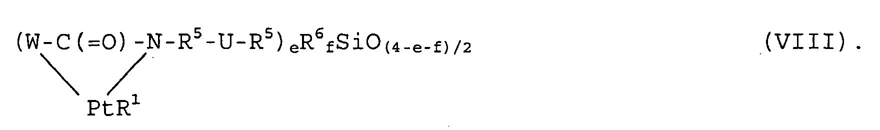

3. Crosslinkable polyorganosiloxane compositions according to claim 1 or 2, **characterized in that** R¹ is cycloocta-1,5-diene.

4. Crosslinkable polyorganosiloxane compositions according to claim 1 or 2, **characterized in that** R¹ is bicyclo[2.2.1]hepta-2,5-diene.

5. Process for preparing crosslinkable polyorganosiloxane compositions according to one of claims 1 to 4,
**characterized in that** it comprises mixing the constituents
(A) polyorganosiloxanes which have radicals having aliphatic carbon-carbon multiple bonds,
(B) polyorganosiloxanes with Si-bonded hydrogen atoms, or, instead of (A) and (B),
(C) polyorganosiloxanes which have SiC-bonded radicals with aliphatic carbon-carbon multiple bonds and Si-bonded hydrogen atoms, and
(D) platinum catalysts selected from the group consisting of 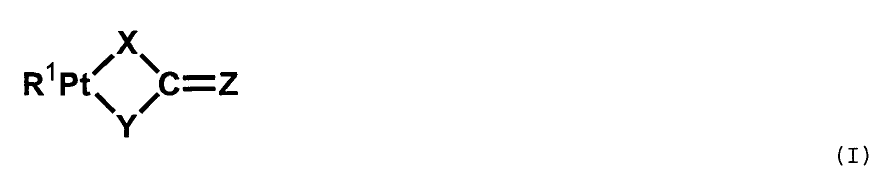 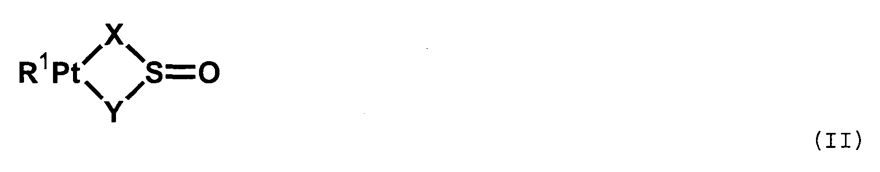 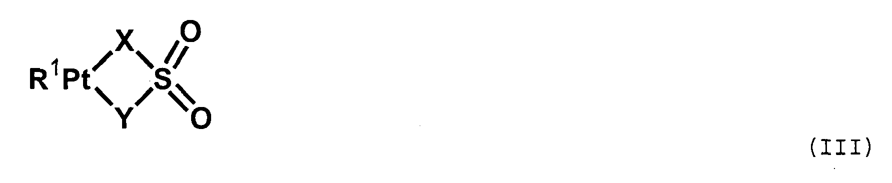 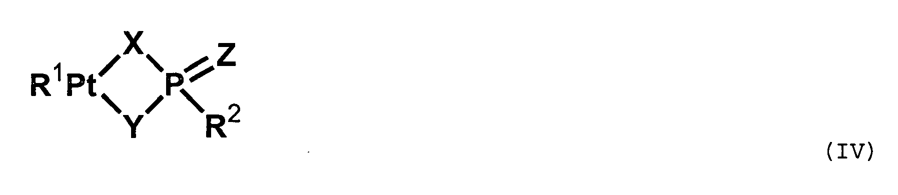 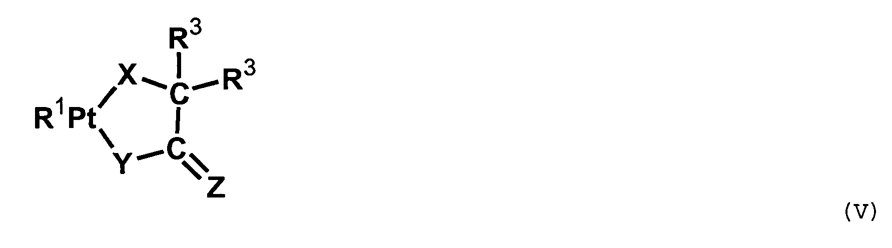 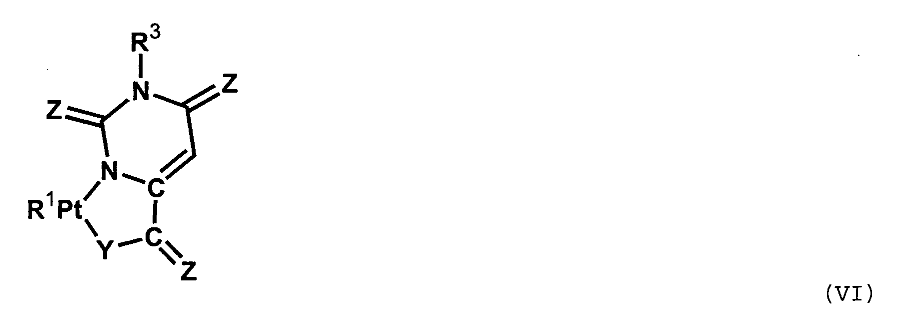 and also silanes and siloxanes comprising at least one of the units of the average general formulae (VII), (VIII) or (IX) 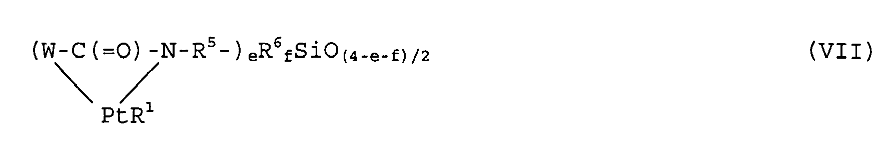 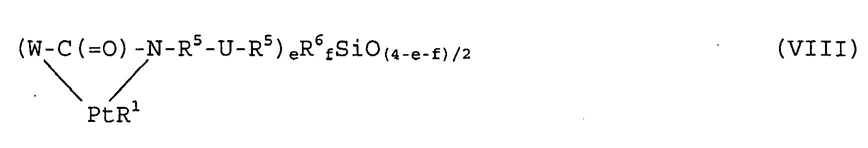 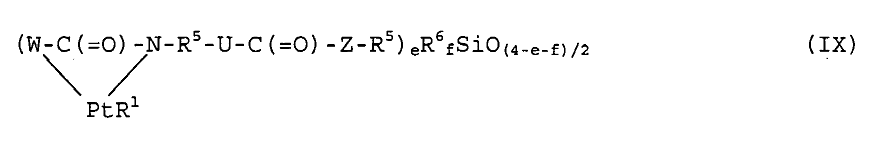
in which
R¹ is an optionally substituted diene which is bonded to platinum by at least one π bond and is an unbranched or branched chain having from 4 to 18 carbon atoms, a bicyclic system or a cyclic ring having from 6 to 28 carbon atoms,
e is 0, 1, 2 or 3,
f is 0, 1, 2 or 3, with the proviso that e + f is 4 for silanes and is 0, 1, 2 or 3 for siloxanes, and that at least one unit where e does not equal 0 is present per molecule,
U is O, NR², N-C(=O)-N(H)R²
W is NR⁷, C(R³)-CO₂R³, C(R³)-C(=Z)-R³, S, O, C(R³)₂
X is NR², C(R³)-CO₂R³, C(R³)-C(=Z)-R³, S, O, C(R³)₂
Y is NR², C(R³)-CO₂R³, C(R³)-C(=Z)-R³, S, O, C(R³)-CN
Z is O, S, Se, NR², CR⁴₂
R² are each independently hydrogen, monovalent hydrocarbon radicals which have from 1 to 24 carbon atoms and may optionally be substituted and may contain heteroatoms in the chains or the rings,
R³ are each independently hydrogen, or monovalent, optionally substituted hydrocarbon radicals having from 1 to 28 carbon atoms,
R⁴ are each independently hydrogen, or monovalent, optionally substituted hydrocarbon radicals having from 1 to 24 carbon atoms, with the proviso that at least one radical is -CN, -CO₂R³, -C(=O)-R³, -NO₂, -C(=O)-H or halogen,
R⁵ are each independently divalent, optionally substituted hydrocarbon radicals having from 1 to 26 carbon atoms,
R⁶ are each independently monovalent, optionally substituted hydrocarbon radicals having from 1 to 20 carbon atoms and
R⁷ are each independently monovalent, optionally substituted hydrocarbon radicals having from 1 to 20 carbon atoms.

6. Process for preparing silicone elastomers, **characterized in that** it comprises crosslinking the crosslinkable polyorganosiloxane compositions according to one of claims 1 to 4 by the influence of heat or radiation.

7. Silane or siloxane platinum catalyst comprising at least one unit of the general formulae (VII), (VIII) or (IX) 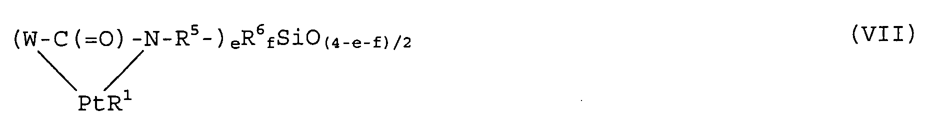 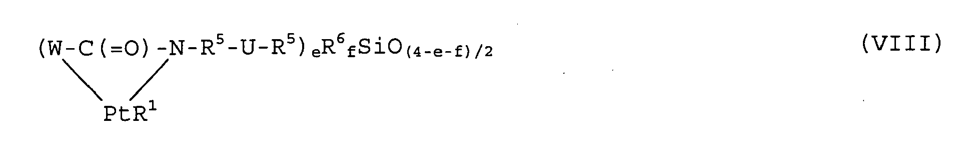 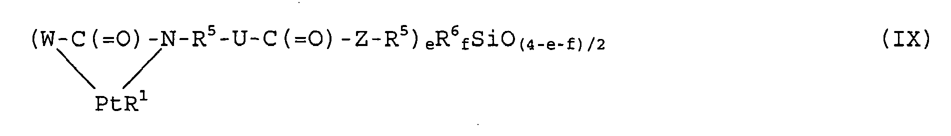 in which
e is 0, 1, 2 or 3,
f is 0, 1, 2 or 3, with the proviso that e + f is 4 for silanes and is 0, 1, 2 or 3 for siloxanes, and that at least one unit where e does not equal 0 is present per molecule,
U is O, NR², N-C(=O)-N(H)R²
W is NR⁷, C(R³)-CO₂R³, C(R³)-C(=Z)-R³, S, O, C(R³)₂
R¹ is an optionally substituted diene which is bonded to platinum by at least one π bond and is an unbranched or branched chain having from 4 to 18 carbon atoms, a bicyclic system or a cyclic ring having from 6 to 28 carbon atoms,
R² are each independently hydrogen, monovalent hydrocarbon radicals which have from 1 to 24 carbon atoms and may optionally be substituted and/or may contain heteroatoms in the chains or the rings,
R³ are each independently hydrogen, or monovalent, optionally substituted hydrocarbon radicals having from 1 to 28 carbon atoms,
R⁵ are each independently divalent, optionally substituted hydrocarbon radicals having from 1 to 26 carbon atoms,
R⁶ are each independently monovalent, optionally substituted hydrocarbon radicals having from 1 to 20 carbon atoms and
R⁷ are each independently monovalent, optionally substituted hydrocarbon radicals having from 1 to 20 carbon atoms.

8. Platinum catalyst according to claim 7, **characterized in that** R¹ is cycloocta-1,5-diene.

9. Platinum catalyst according to claim 7, **characterized in that** R¹ is bicyclo[2.2.1]hepta-2,5-diene.

10. Process for preparing the platinum catalysts according to claim 7, **characterized in that** it comprises
a) initially charging CODPtCl₂, the appropriate ligand and silver oxide in a solvent,
b) reacting the reaction mixture while supplying heat and
c) removing the silver compounds after the reaction mixture has been cooled
in which
CODPtCl₂ is dichloro(cycloocta-1,5-diene)platinum(II).

11. Process for preparing the platinum catalysts according to claim 7, **characterized in that** it comprises
a) initially charging nbdPtCl₂, the appropriate ligand and silver oxide in a solvent,
b) reacting the reaction mixture while supplying heat and
c) removing the silver compounds after the reaction mixture has been cooled
in which
nbdPtCl₂ is dichloro(bicyclo[2.2.1]hepta-2,5-diene)platinum(II).

## Revendications

1. Masses réticulables à base de polyorganosiloxane, contenant
(A) des polyorganosiloxanes, qui présentent des radicaux avec des liaisons multiples aliphatiques carbone-carbone,
(B) des polyorganosiloxanes avec des atomes d'hydrogène liés par Si ou, au lieu de (A) et (B)
(C) des polyorganosiloxanes, qui présentent des radicaux liés par SiC avec des liaisons multiples aliphatiques carbone-carbone et des atomes d'hydrogène liés par Si, et
(D) un catalyseur de platine, choisi dans le groupe constitué par 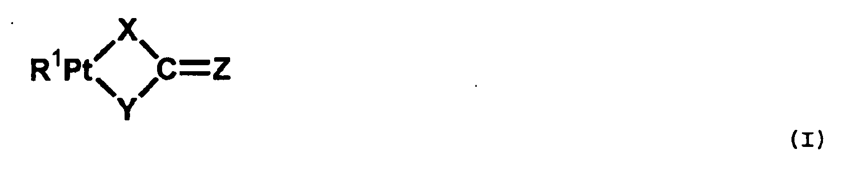 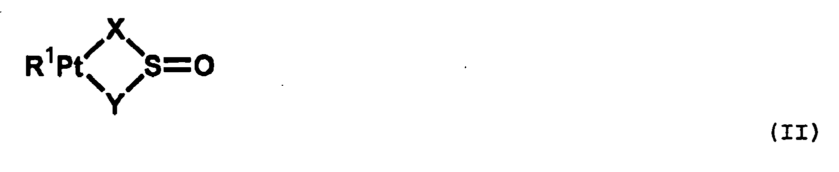 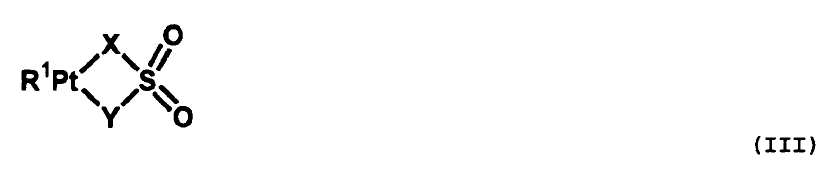 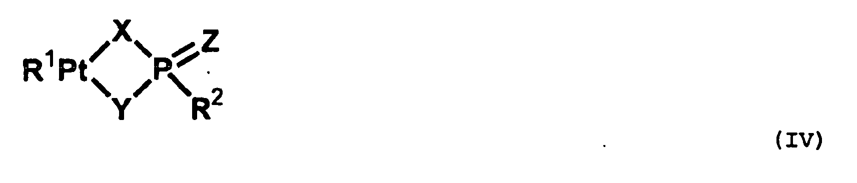 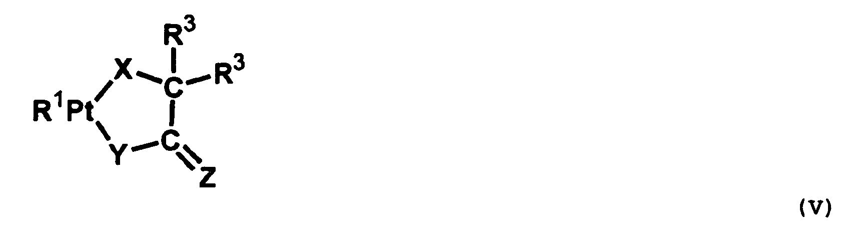 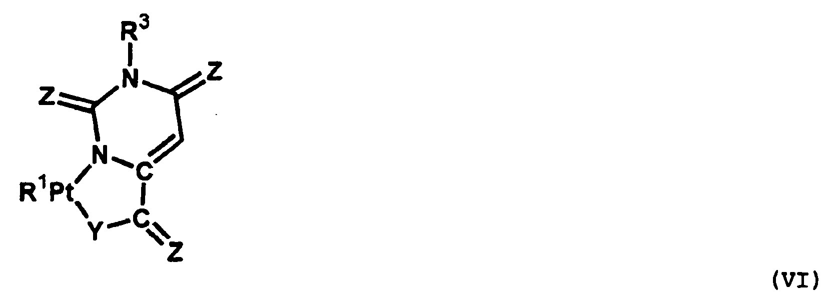 ainsi que des silanes et des siloxanes contenant au moins une des unités de formules générales (VII), (VIII) ou (IX) 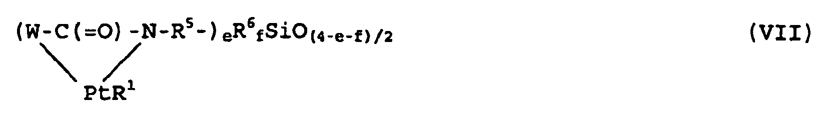 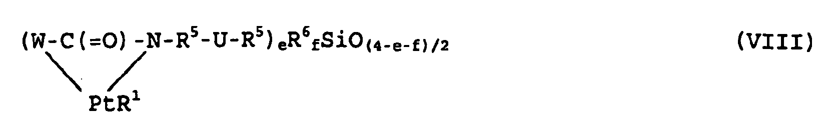 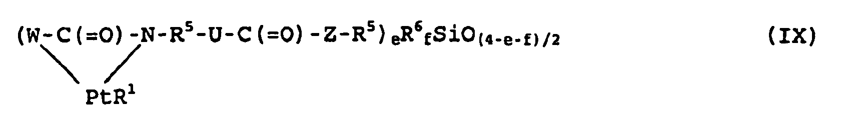
dans lesquelles
R¹ signifie un diène le cas échéant substitué, qui est lié par au moins une liaison π avec le platine et une chaîne non ramifiée ou ramifiée comprenant 4 à 18 atomes de carbone, un bicycle ou un cycle comprenant 6 à 28 atomes de carbone,
e vaut 0, 1, 2 ou 3
f vaut 0, 1, 2 ou 3, à condition que e + f pour les silanes soit égal à 4 et pour les siloxanes 0, 1, 2 ou 3 et qu'au moins une unité avec e différent de 0 soit contenue par molécule,
U signifie O, NR², N-C(=O)-N(H)R²
W signifie NR⁷, C(R³)-CO₂R³, C(R³)-C(=Z)-R³, S, O, C(R³)₂
X signifie NR², C(R³)-CO₂R³, C(R³)-C(=Z)-R³, S, O, C(R³)₂
Y signifie NR², C(R³)-CO₂R³, C(R³)-C(=Z)-R³, S, O, C(R³)-CN
Z signifie O, S, Se, NR², CR⁴₂
R² signifie, indépendamment l'un de l'autre, hydrogène, des radicaux hydrocarbonés monovalents comprenant 1 à 24 atomes de carbone, qui sont le cas échéant substitués ou qui peuvent contenir des hétéroatomes dans les chaînes ou les cycles,
R³ signifie, indépendamment l'un de l'autre, hydrogène ou des radicaux hydrocarbonés monovalents, le cas échéant substitués comprenant 1 à 28 atomes de carbone,
R⁴ signifie, indépendamment l'un de l'autre, hydrogène ou des radicaux hydrocarbonés monovalents, le cas échéant substitués, comprenant 1 à 24 atomes de carbone, à condition qu'au moins un radical représente -CN, -CO₂R³, -C(=O)-R³, -NO₂, -C(=O)-H ou halogène,
R⁵ signifie, indépendamment l'un de l'autre, des radicaux hydrocarbonés divalents, le cas échéant substitués, comprenant 1 à 26 atomes de carbone,
R⁶ signifie, indépendamment l'un de l'autre, des radicaux hydrocarbonés monovalents, le cas échéant substitués comprenant 1 à 20 atomes de carbone et
R⁷ signifie, indépendamment l'un de l'autre, des radicaux hydrocarbonés monovalents, le cas échéant substitués comprenant 1 à 20 atomes de carbone.

2. Masses réticulables à base de polyorganosiloxane selon la revendication 1, **caractérisées en ce que** le catalyseur de platine est choisi dans le groupe constitué par 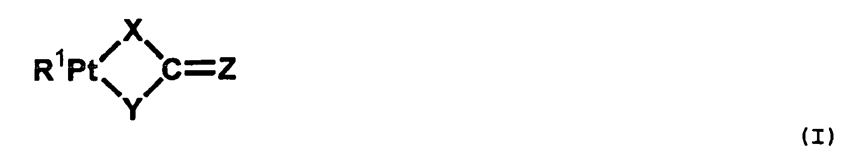 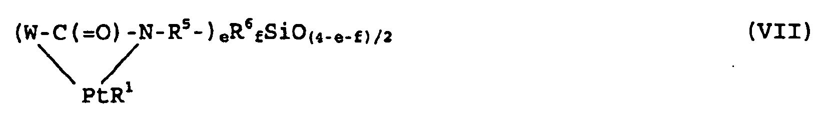 et

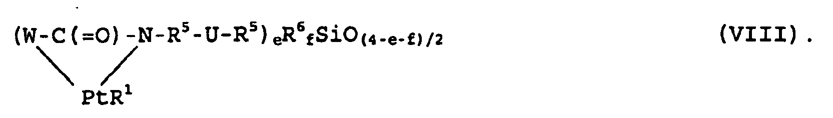

3. Masses réticulables à base de polyorganosiloxane selon la revendication 1 ou 2, **caractérisées en ce que** R¹ représente cycloocta-1,5-diène.

4. Masses réticulables à base de polyorganosiloxane selon la revendication 1 ou 2, **caractérisées en ce que** R¹ représente bicyclo[2.2.1]hepta-2,5-diène.

5. Procédé pour la préparation de masses réticulables à base de polyorganosiloxane selon l'une quelconque des revendications 1 à 4, **caractérisé en ce qu'**on mélange les constituants
(A) polyorganosiloxanes, qui présentent des radicaux avec des liaisons multiples aliphatiques carbone-carbone,
(B) polyorganosiloxanes avec des atomes d'hydrogène liés par Si ou, au lieu de (A) et (B)
(C) polyorganosiloxanes, qui présentent des radicaux liés par SiC avec des liaisons multiples aliphatiques carbone-carbone et des atomes d'hydrogène liés par Si, et
(D) catalyseur de platine, choisi dans le groupe constitué par 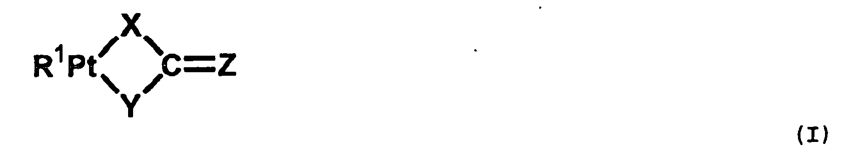 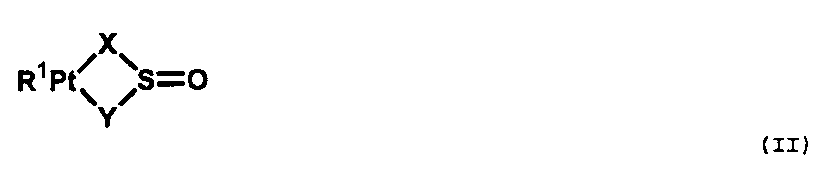 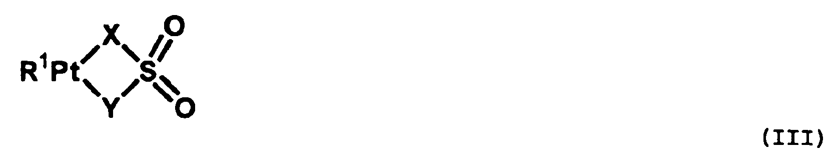 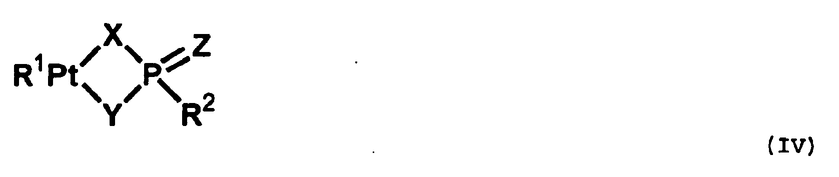 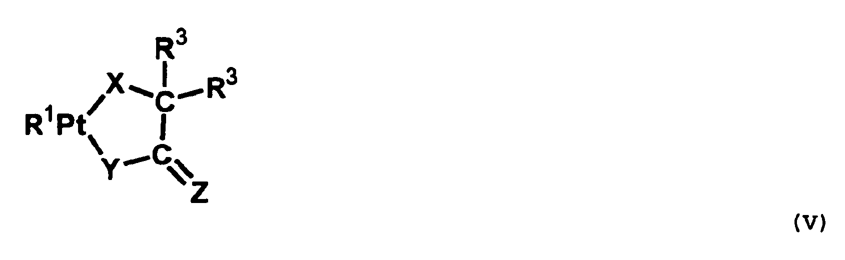 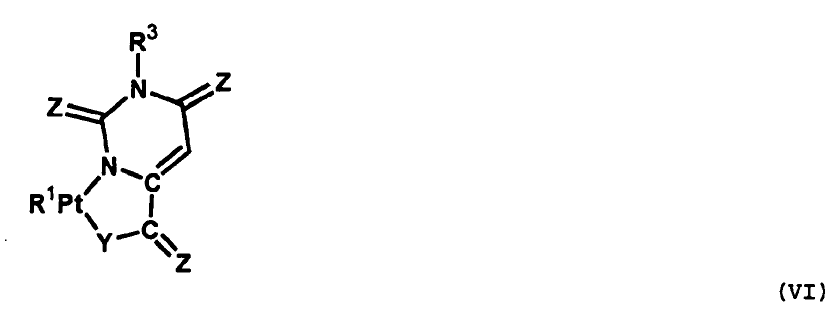 ainsi que des silanes et des siloxanes contenant au moins une des unités de formules générales moyennes (VII), (VIII) ou (IX) 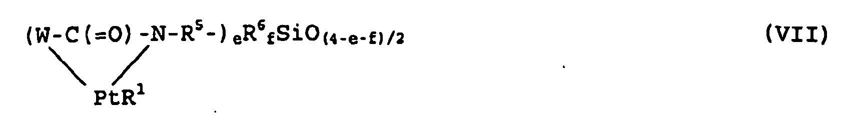 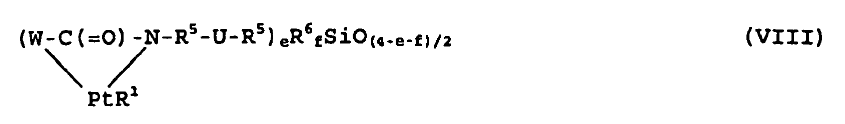 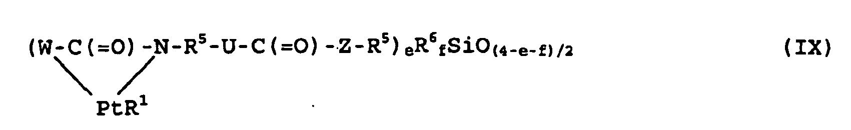
dans lesquelles
R¹ signifie un diène le cas échéant substitué, qui est lié par au moins une liaison π avec le platine et une chaîne non ramifiée ou ramifiée comprenant 4 à 18 atomes de carbone, un bicycle ou un cycle comprenant 6 à 28 atomes de carbone,
e vaut 0, 1, 2 ou 3
f vaut 0, 1, 2 ou 3, à condition que e + f pour les silanes soit égal à 4 et pour les siloxanes 0, 1, 2 ou 3 et qu'au moins une unité avec e différent de 0 soit contenue par molécule,
U signifie O, NR², N-C(=O)-N(H)R²
W signifie NR⁷, C(R³)-CO₂R³, C(R³)-C(=Z)-R³, S, O, C(R³)₂
X signifie NR², C(R³)-CO₂R³, C(R³)-C(=Z)-R³, S, O, C(R³)₂
Y signifie NR², C(R³) -CO₂R³, C (R³) -C(=Z)-R³, S, O, C (R³) -CN
Z signifie O, S, Se, NR², CR⁴₂
R² signifie, indépendamment l'un de l'autre, hydrogène, des radicaux hydrocarbonés monovalents comprenant 1 à 24 atomes de carbone, qui sont le cas échéant substitués et qui peuvent contenir des hétéroatomes dans les chaînes ou les cycles,
R³ signifie, indépendamment l'un de l'autre, hydrogène ou des radicaux hydrocarbonés monovalents, le cas échéant substitués comprenant 1 à 28 atomes de carbone,
R⁴ signifie, indépendamment l'un de l'autre, hydrogène ou des radicaux hydrocarbonés monovalents, le cas échéant substitués, comprenant 1 à 24 atomes de carbone, à condition qu'au moins un radical représente -CN, -CO₂R³, -C(=O)-R³, -NO₂, -C(=O)-H ou halogène,
R⁵ signifie, indépendamment l'un de l'autre, des radicaux hydrocarbonés divalents, le cas échéant substitués, comprenant 1 à 26 atomes de carbone,
R⁶ signifie, indépendamment l'un de l'autre, des radicaux hydrocarbonés monovalents, le cas échéant substitués comprenant 1 à 20 atomes de carbone et
R⁷ signifie, indépendamment l'un de l'autre, des radicaux hydrocarbonés monovalents, le cas échéant substitués comprenant 1 à 20 atomes de carbone.

6. Procédé pour la préparation d'élastomères à base de silicone, **caractérisé en ce qu'**on réticule les masses réticulables à base de polyorganosiloxane selon l'une quelconque des revendications 1 à 4 par l'influence de la chaleur ou d'un rayonnement.

7. Catalyseur de type silane-platine ou siloxane-platine, contenant au moins une unité des formules générales (VII), (VIII) ou (IX) 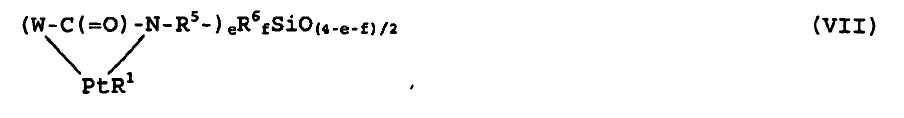 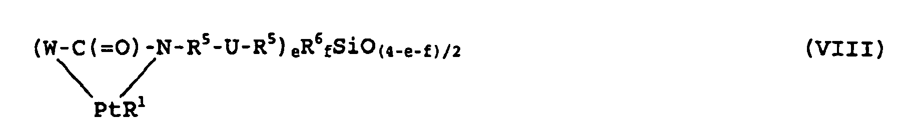 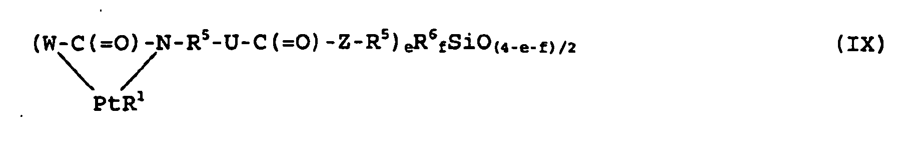 dans lesquelles
e vaut 0, 1, 2 ou 3
f vaut 0, 1, 2 ou 3, à condition que e + f pour les silanes soit égal à 4 et pour les siloxanes 0, 1, 2 ou 3 et qu'au moins une unité avec e différent de 0 soit contenue par molécule,
U signifie O, NR², N-C(=O)-N(H)R²
W signifie NR⁷, C(R³)-CO₂R³, C(R³)-C(=Z)-R³, S, O, C(R³)₂
R¹ signifie un diène le cas échéant substitué, qui est lié par au moins une liaison π avec le platine et une chaîne non ramifiée ou ramifiée comprenant 4 à 18 atomes de carbone, un bicycle ou un cycle comprenant 6 à 28 atomes de carbone,
R² signifie, indépendamment l'un de l'autre, hydrogène, des radicaux hydrocarbonés monovalents comprenant 1 à 24 atomes de carbone, qui sont le cas échéant substitués et/ou qui peuvent contenir des hétéroatomes dans les chaînes ou les cycles,
R³ signifie, indépendamment l'un de l'autre, hydrogène ou des radicaux hydrocarbonés monovalents, le cas échéant substitués comprenant 1 à 28 atomes de carbone,
R⁵ signifie, indépendamment l'un de l'autre, des radicaux hydrocarbonés divalents, le cas échéant substitués, comprenant 1 à 26 atomes de carbone,
R⁶ signifie, indépendamment l'un de l'autre, des radicaux hydrocarbonés monovalents, le cas échéant substitués comprenant 1 à 20 atomes de carbone et
R⁷ signifie, indépendamment l'un de l'autre, des radicaux hydrocarbonés monovalents, le cas échéant substitués comprenant 1 à 20 atomes de carbone.

8. Catalyseur de platine selon la revendication 7, **caractérisé en ce que** R¹ représente cycloocta-1,5-diène.

9. Catalyseur de platine selon la revendication 7, **caractérisé en ce que** R¹ représente bicyclo[2.2.1]hepta-2,5-diène.

10. Procédé pour la préparation des catalyseurs de platine selon la revendication 7, **caractérisé en ce que**
a) du CODPtCl₂, le ligand correspondant et de l'oxyde d'argent sont disposés au préalable dans un solvant,
b) le mélange réactionnel est amené à réagir en alimentant de la chaleur et
c) les composés à base d'argent sont éliminés après refroidissement du mélange réactionnel
où
CODPtCl₂ signifie dichloro-(cycloocta-1,5-diène)platine (II).

11. Procédé pour la préparation des catalyseurs de platine selon la revendication 7, **caractérisé en ce que**
a) du nbdPtCl₂, le ligand correspondant et de l'oxyde d'argent sont disposés au préalable dans un solvant,
b) le mélange réactionnel est amené à réagir en alimentant de la chaleur et
c) les composés à base d'argent sont éliminés après refroidissement du mélange réactionnel
où
nbdPtCl₂ signifie dichloro-(bicyclo[2.2.1]hepta-2,5-diène)platine (II) .
